# EUROPEAN PATENT APPLICATION

(11) **EP 4 838 790 A1**
(43) Date of publication of application: **11.11.2026**
(21) Application number: 24921746.4
(22) Date of filing: 13.12.2024
(51) Int. Cl.: H04B 7/0413

(54) **SIGNAL TRANSMISSION METHOD, AND COMMUNICATION APPARATUS**

(30) Priority: 30.01.2024 CN 202410142033
(71) Applicant: Huawei Technologies Co., Ltd., Shenzhen, Guangdong 518129 (CN)
(72) Inventor: LIU, Yong, Shenzhen, Guangdong 518129 (CN); BI, Xiaoyan, Shenzhen, Guangdong 518129 (CN); XI, Xiaojun, Shenzhen, Guangdong 518129 (CN)
(74) Representative: Grünecker Patent- und Rechtsanwälte PartG mbB
(86) International application number: PCT/CN2024/139211
(87) International publication number: WO 2025/161724

(57) **Abstract**

This application provides a signal transmission method and a communication apparatus. The method includes: A first communication apparatus sends a reference signal to a second communication apparatus via an RIS, and the RIS sends the reference signal to the second communication apparatus based on first processing, where the first processing is processing of a first part of elements in a beam vector according to a first rule, such as zeroing or phase inversion; or the first processing is processing a first part of unit cells on the RIS according to a first rule, for example, switching statuses of the part of unit cells. In this application, switching between a wide beam and a narrow beam can be implemented by adjusting the part of elements in the beam vector or the statuses of unit cells on the RIS, thereby improving beam training efficiency.

## Description

This application claims priority to Chinese Patent Application No. 202410142033.3, filed with the China National Intellectual Property Administration on January 30, 2024, and entitled "SIGNAL TRANSMISSION METHOD AND COMMUNICATION APPARATUS", which is incorporated herein by reference in its entirety.

### TECHNICAL FIELD

This application relates to the communication field, and more specifically, to a signal transmission method and a communication apparatus.

### BACKGROUND

Multiple-input multiple-output (multiple-input multiple-output, MIMO) technology leverages spatial resources to achieve array gain, multiplexing gain, diversity gain, and an interference cancellation gain in space without increasing system bandwidth, thereby significantly enhancing the capacity and spectral efficiency of communication systems. However, as communication requirements for high data rates, high reliability, and low latency continue to increase, modern communication systems face challenges of greater capacity, wider coverage, and lower latency. To address these challenges, reconfigurable intelligent surfaces (reconfigurable intelligent surfaces, RISs) have emerged as a promising technology and are being extensively studied.

### SUMMARY

This application provides a signal transmission method and a communication apparatus, to implement switching between a wide beam and a narrow beam by adjusting elements in an RIS beam vector or statuses of RIS unit cells, thereby improving beam sweeping efficiency.

According to a first aspect, a signal transmission method is provided. The method may be performed by a communication apparatus. The communication apparatus may be an RIS, or may be a chip or a circuit used in the RIS. This is not limited in this application. The following uses the RIS as an example for description.

The method may include: receiving a reference signal from a first communication apparatus; and sending the reference signal to a second communication apparatus based on first processing, where the first processing is processing a first part of elements in a beam vector according to a first rule, or the first processing is processing a first part of unit cells on the RIS according to the first rule.

Based on the foregoing technical solution, the RIS may adjust the elements in the beam vector corresponding to an RIS beam, or the RIS may adjust the unit cells on the RIS, to implement switching between a wide beam and a narrow beam. Specifically, when the first communication apparatus sends the reference signal to the second communication apparatus via the RIS, the RIS receives the reference signal from the first communication apparatus, and may send the reference signal to the second communication apparatus by using a beam or unit cells obtained through processing according to the first rule. In this way, a weight vector of the beam does not need to be reconfigured, the elements in the beam vector may be directly adjusted according to the first rule, or the unit cells that are on the RIS and that are used to send the reference signal may be adjusted, to improve beam training efficiency.

With reference to the first aspect, in some implementations of the first aspect, that the first processing is processing the first part of elements in the beam vector according to the first rule includes: the first processing is zeroing the first part of elements in the beam vector according to the first rule.

Based on the foregoing solution, the part of elements in the beam vector are zeroed, so that switching between a wide beam and a narrow beam can be implemented, thereby improving beam training efficiency.

With reference to the first aspect, in some implementations of the first aspect, the first part of elements are consecutive elements, or the first part of elements are equally spaced elements.

Based on the foregoing solution, the part of elements in the beam vector may be processed at a specific spacing, for example, the elements in the beam vector are zeroed at a specific spacing; or a plurality of consecutive elements may be processed, for example, the plurality of consecutive elements are zeroed. This manner can implement switching between a wide beam and a narrow beam and is also simple and easy to implement, and is applicable to a large quantity of scenarios.

With reference to the first aspect, in some implementations of the first aspect, the method further includes: receiving first indication information, where the first indication information indicates the first part of elements.

With reference to the first aspect, in some implementations of the first aspect, the first indication information includes at least one of the following: a starting element number in the first part of elements, a total quantity of elements in the first part of elements, or a spacing between adjacent elements in the first part of elements.

Based on the foregoing solution, the elements that need to be processed may be indirectly indicated, for example, indicated by using a start position, the total quantity of elements, and the spacing. In this way, all elements that need to be processed do not need to be indicated, so that indication overheads can be reduced.

With reference to the first aspect, in some implementations of the first aspect, the first indication information includes a beam grouping policy, the beam grouping policy has an association relationship with the first part of elements, and the beam grouping policy is a grouping policy for beams on the RIS.

Optionally, the association relationship is predefined, or the RIS receives the association relationship.

Based on the foregoing solution, the elements that need to be processed may be indirectly indicated, for example, indicated by using the beam grouping policy. The beam grouping policy has an association relationship with the elements that need to be processed. In this way, the elements that need to be processed may be directly determined based on the beam grouping policy and the association relationship, so that indication overheads are reduced.

With reference to the first aspect, in some implementations of the first aspect, the first indication information includes a bitmap bitmap, and the bitmap indicates position information of the first part of elements.

With reference to the first aspect, in some implementations of the first aspect, that the first processing is processing the first part of unit cells on the RIS according to the first rule includes: the first processing is switching statuses of the first part of unit cells on the RIS to connected states or off states according to the first rule.

Based on the foregoing technical solution, the RIS may adjust the statuses of the unit cells on the RIS, for example, adjust the part of unit cells on the RIS to the off or connected states, to implement switching between a wide beam and a narrow beam.

With reference to the first aspect, in some implementations of the first aspect, the first part of unit cells are consecutive unit cells, or the first part of unit cells are equally spaced unit cells.

Based on the foregoing solution, the unit cells on the RIS may be adjusted at a specific spacing, or a plurality of consecutive unit cells may be processed. This manner can implement switching between a wide beam and a narrow beam and is also simple and easy to implement, and is applicable to a large quantity of scenarios.

With reference to the first aspect, in some implementations of the first aspect, the method further includes: receiving second indication information, where the second indication information indicates the first part of unit cells.

With reference to the first aspect, in some implementations of the first aspect, the second indication information includes at least one of the following: a starting unit cell number in the first part of unit cells, a total quantity of unit cells in the first part of unit cells, or a spacing between adjacent unit cells in the first part of unit cells.

Based on the foregoing solution, the unit cells that need to be processed may be indirectly indicated, for example, indicated by using a start position, the total quantity of unit cells, and the spacing. In this way, all unit cells that need to be processed do not need to be indicated, so that indication overheads can be reduced.

With reference to the first aspect, in some implementations of the first aspect, the second indication information includes a beam grouping policy, the beam grouping policy has an association relationship with the first part of unit cells, and the beam grouping policy is a grouping policy for beams on the RIS.

Optionally, the association relationship is predefined, or the association relationship is received.

Based on the foregoing solution, the elements that need to be processed may be indirectly indicated, for example, indicated by using the beam grouping policy. The beam grouping policy has an association relationship with the unit cells that need to be processed. In this way, the unit cells that need to be processed may be directly determined based on the beam grouping policy and the association relationship, so that indication overheads are reduced.

With reference to the first aspect, in some implementations of the first aspect, the second indication information includes a bitmap bitmap, and the bitmap indicates position information of the first part of unit cells.

With reference to the first aspect, in some implementations of the first aspect, the first rule is determined according to the beam grouping policy, and the beam grouping policy is the grouping policy of the beams on the RIS.

With reference to the first aspect, in some implementations of the first aspect, the beam grouping policy includes at least one of the following: performing L levels of beam measurement, a beam group or a quantity of beam groups during each level of beam measurement, or a beam or a quantity of beams in each beam group, where L is an integer greater than or equal to 1.

Based on the foregoing solution, the beam grouping policy is designed, for example, the L levels of beam measurement are performed, so that a quantity of beams during the times of beam measurement is less than a quantity of beams during one time of beam measurement, thereby reducing beam measurement overheads.

With reference to the first aspect, in some implementations of the first aspect, the beam grouping policy is determined based on capability information of the RIS.

With reference to the first aspect, in some implementations of the first aspect, the method further includes: sending the capability information of the RIS, where the capability information of the RIS is used to determine the beam grouping policy.

With reference to the first aspect, in some implementations of the first aspect, the beam grouping policy is sent to the first communication apparatus.

With reference to the first aspect, in some implementations of the first aspect, the beam grouping policy is received.

With reference to the first aspect, in some implementations of the first aspect, the capability information of the RIS includes at least one of the following: horizontal and vertical coverage angles of the RIS, an angular resolution, a size of the RIS, or a total quantity of beams on the RIS.

With reference to the first aspect, in some implementations of the first aspect, the method further includes: receiving third indication information, where the third indication information indicates the first rule.

With reference to the first aspect, in some implementations of the first aspect, the method further includes: receiving a beam measurement result from the second communication apparatus, where the beam measurement result is determined based on the reference signal; and sending the beam measurement result to the first communication apparatus.

According to a second aspect, a signal transmission method is provided. The method may be performed by a communication apparatus. The communication apparatus may be a terminal device, or may be a chip or a circuit used in the terminal device; or may be a network device, or may be a chip or a circuit used in the network device. This is not limited in this application.

The method may include: sending first indication information and/or third indication information to a reconfigurable intelligent surface RIS, where the third indication information indicates a first rule, the first rule indicates that a first part of elements in a beam vector of the RIS are processed, and the first indication information indicates the first part of elements. The beam vector of the RIS may be understood as the beam vector corresponding to the RIS, the beam vector corresponding to the unit cells on the RIS, or the beam vector of the RIS.

With reference to the second aspect, in some implementations of the second aspect, that the first rule indicates that the first part of elements in the beam vector of the RIS are processed includes: the first rule indicates that the first part of elements in the beam vector of the RIS are zeroed.

With reference to the second aspect, in some implementations of the second aspect, the first part of elements are consecutive elements, or the first part of elements are equally spaced elements.

With reference to the second aspect, in some implementations of the second aspect, the first indication information includes at least one of the following: a starting element number in the first part of elements, a total quantity of elements in the first part of elements, or a spacing between adjacent elements in the first part of elements.

With reference to the second aspect, in some implementations of the second aspect, the first indication information includes a beam grouping policy, the beam grouping policy has an association relationship with the first part of elements, and the beam grouping policy is a grouping policy for beams on the RIS.

With reference to the second aspect, in some implementations of the second aspect, the first indication information includes a bitmap bitmap, and the bitmap indicates the first part of elements.

According to a third aspect, a signal transmission method is provided. The method may be performed by a communication apparatus. The communication apparatus may be a terminal device, or may be a chip or a circuit used in the terminal device; or may be a network device, or may be a chip or a circuit used in the network device. This is not limited in this application.

The method may include: sending second indication information and/or third indication information to a reconfigurable intelligent surface RIS, where the third indication information indicates a first rule, the first rule indicates that a first part of unit cells on the RIS are processed, and the second indication information indicates the first part of unit cells on the RIS.

With reference to the third aspect, in some implementations of the third aspect, that the first rule indicates that the first part of unit cells on the RIS are processed includes: the first rule indicates that statuses of the first part of unit cells on the RIS are switched to connected states or off states.

With reference to the third aspect, in some implementations of the third aspect, the first part of unit cells are consecutive unit cells, or the first part of unit cells are equally spaced unit cells.

With reference to the third aspect, in some implementations of the third aspect, the second indication information includes at least one of the following: a starting unit cell number in the first part of unit cells, a total quantity of unit cells in the first part of unit cells, or a spacing between adjacent unit cells in the first part of unit cells.

With reference to the third aspect, in some implementations of the third aspect, the second indication information includes a beam grouping policy, the beam grouping policy has an association relationship with the first part of unit cells, and the beam grouping policy is a grouping policy for beams on the RIS.

With reference to the third aspect, in some implementations of the third aspect, the second indication information includes a bitmap bitmap, and the bitmap indicates position information of the first part of unit cells.

With reference to the second aspect or the third aspect, in some implementations, the first rule is determined according to the beam grouping policy, and the beam grouping policy is a grouping policy for beams on the RIS.

With reference to the second aspect or the third aspect, in some implementations, the beam grouping policy includes at least one of the following: performing L levels of beam measurement, a beam group or a quantity of beam groups during each level of beam measurement, or a beam or a quantity of beams in each beam group, where L is an integer greater than or equal to 1.

With reference to the second aspect or the third aspect, in some implementations, the beam grouping policy is determined based on capability information of the RIS.

With reference to the second aspect or the third aspect, in some implementations, the method further includes any one of the following: receiving the capability information of the RIS, where the capability information of the RIS is used to determine the beam grouping policy; or sending the beam grouping policy.

With reference to the second aspect or the third aspect, in some implementations, the capability information of the RIS includes at least one of the following: horizontal and vertical coverage angles of the RIS, an angular resolution, a size of the RIS, or a total quantity of beams on the RIS.

According to a fourth aspect, a signal transmission method is provided. The method may be performed by a communication apparatus. The communication apparatus may be an RIS, or may be a chip or a circuit used in the RIS. This is not limited in this application.

The method may include: sending a beam grouping policy, where the beam grouping policy is a grouping policy for beams on the configurable intelligent surface RIS, and the beam grouping policy includes at least one of the following: performing L levels of beam measurement, a beam group for each level of beam measurement, or a beam in each beam group, where L is an integer greater than or equal to 1.

With reference to the fourth aspect, in some implementations of the fourth aspect, the beam grouping policy is determined based on capability information of the RIS.

With reference to the fourth aspect, in some implementations of the fourth aspect, the capability information of the RIS includes at least one of the following: horizontal and vertical coverage angles of the RIS, an angular resolution, a size of the RIS, or a total quantity of beams on the RIS.

For beneficial effects and possible designs of the second aspect to the fourth aspect, refer to the related descriptions in the first aspect. Details are not described herein again.

According to a fifth aspect, a communication apparatus is provided. The apparatus is configured to perform the method according to any one of the possible implementations of the first aspect to the fourth aspect. Specifically, the apparatus may include a unit and/or a module configured to perform the method according to any one of the possible implementations of the first aspect to the fourth aspect, for example, a processing unit and/or a communication unit.

In an implementation, the apparatus is a communication device (for example, a terminal device, a network device, or an RIS). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device, a network device, or an RIS). When the apparatus is the chip, the chip system, or the circuit used in the communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method according to any one of the possible implementations of the first aspect to the fourth aspect. Optionally, the apparatus further includes the memory, configured to store the computer program or the instructions. Optionally, the apparatus further includes a communication interface, and the processor reads the computer program or the instructions in the memory through the communication interface.

In an implementation, the apparatus is a communication device (for example, a terminal device, a network device, or an RIS).

In another implementation, the apparatus is a chip, a chip system, or a circuit used in a communication device (for example, a terminal device, a network device, or an RIS).

According to a seventh aspect, a processor is provided, configured to perform the methods provided in the first aspect to the fourth aspect.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

Optionally, the apparatus further includes a memory, configured to store a program. Correspondingly, the at least one processor is configured to execute the computer program or the instructions in the memory.

Optionally, the apparatus further includes a communication interface. The communication interface is coupled to the processor, and may be configured to: input information to the processor, or output information in the processor.

According to an eighth aspect, a computer-readable storage medium is provided. The computer-readable medium stores program code to be executed by a device, and the program code is used to perform the method according to any one of the possible implementations of the first aspect to the fourth aspect.

According to a ninth aspect, a computer program product including instructions is provided. When the computer program product runs on a computer, the computer is caused to perform the method according to any one of the possible implementations of the first aspect to the fourth aspect.

According to a tenth aspect, a chip is provided. The chip includes a processor and a communication interface. The processor reads instructions in a memory through the communication interface, to perform the method provided in any one of the implementations of any one of the first aspect to the fourth aspect.

Optionally, in an implementation, the chip further includes a memory. The memory stores a computer program or instructions. The processor is configured to execute the computer program or the instructions in the memory. When the computer program or the instructions are executed, the processor is configured to perform the method provided in any one of the implementations of any one of the first aspect to the fourth aspect.

According to an eleventh aspect, a communication system is provided, including one or more of the foregoing RIS, first communication apparatus, and second communication apparatus.

### BRIEF DESCRIPTION OF DRAWINGS

FIG. 1 is a diagram of a wireless communication system applicable to an embodiment of this application;
FIG. 2 is a diagram of a signal transmission method 200 according to an embodiment of this application;
FIG. 3a to FIG. 3c are a diagram of performing zeroing at a fixed spacing applicable to an embodiment of this application;
FIG. 4a to FIG. 4c are a diagram of performing zeroing at consecutive intervals applicable to an embodiment of this application;
FIG. 5a and FIG. 5b are a diagram of switching unit cells to off states at a fixed spacing applicable to an embodiment of this application;
FIG. 6a to FIG. 6c are a diagram of switching a plurality of consecutive unit cells to off states applicable to an embodiment of this application;
FIG. 7 is a schematic flowchart of a signal transmission method 700 applicable to an embodiment of this application;
FIG. 8 is a schematic flowchart of a signal transmission method 800 applicable to an embodiment of this application;
FIG. 9 is a schematic flowchart of a signal transmission method 900 applicable to an embodiment of this application;
FIG. 10 is a schematic flowchart of a signal transmission method 1000 applicable to an embodiment of this application;
FIG. 11 is a diagram of a relationship between a quantity of unit cells on an RIS and beams;
FIG. 12 is a diagram of a beam grouping policy according to an embodiment of this application;
FIG. 13 is a diagram of a communication apparatus 1300 according to an embodiment of this application;
FIG. 14 is a diagram of another communication apparatus 1400 according to an embodiment of this application; and
FIG. 15 is a diagram of a chip system 1500 according to an embodiment of this application.

### DESCRIPTION OF EMBODIMENTS

The following describes technical solutions of this application with reference to the accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), or an internet of things (internet of things, IoT) communication system. The technical solutions provided in this application may be further applied to a low frequency scenario, a high frequency scenario, terahertz, optical communication, a licensed (licensed) frequency band, an unlicensed (unlicensed) frequency band, or the like. The technical solutions provided in this application may be further applied to a non-terrestrial network (non-terrestrial network, NTN) system, for example, inter-satellite communication and satellite communication. In an example, the satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low earth orbit satellite, a medium earth orbit satellite, a high earth orbit satellite, or the like. Alternatively, the satellite may be a non-terrestrial base station, a non-terrestrial device, or the like.

A device in the communication system may send a signal to another device or receive a signal from another device. The signal may include information, signaling, data, or the like. The device may be replaced with an entity, a network entity, a network element, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device.

The terminal device in embodiments of this application includes various devices having a wireless communication function, and may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal such as an MTC terminal or an IoT terminal in any one of the foregoing scenarios. The terminal device may be user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device; may be an apparatus (for example, a communication module, a modem, or a chip in the foregoing device) built in the foregoing device; or may be another processing device connected to a wireless modem. For ease of description, an example in which the terminal device is a terminal or UE is used below for description.

It should be understood that, in some scenarios, the UE may be further configured to serve as a base station. For example, the UE may serve as a scheduling entity that provides a sidelink signal between UE in a scenario such as V2X, D2D, or P2P.

In embodiments of this application, an apparatus configured to implement a function of the terminal device, namely, a terminal apparatus, may be a terminal device, or may be an apparatus that can support the terminal device in implementing the function, for example, a chip system or a chip, where the apparatus may be mounted in the terminal device. In embodiments of this application, the chip system may include a chip, or may include a chip and another discrete component.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point, a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form used by the network device are not limited in embodiments of this application.

In some deployments, the network device mentioned in embodiments of this application may be a device including a CU or a DU or including a CU and a DU, or a device including a CU control plane (a central unit-control plane (central unit-control plane, CU-CP)) node, a CU user plane (a central unit-user plane (central unit-user plane, CU-UP)) node, and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes respectively implement some functions of a base station. For example, the RAN node may be a CU, a DU, a CU-CP, a CU-UP, or a radio unit (radio unit, RU). The CU and the DU may be separately arranged, or may be included in a same network element, for example, a BBU. The RU may be included in a radio frequency device or a radio frequency unit, for example, included in an RRU, an AAU, or an RRH.

In different systems, the CU (or the CU-CP and the CU-UP), the DU, or the RU may also have different names, but a person skilled in the art may understand meanings thereof. For example, the radio access network may alternatively be an open radio access network (open radio access network, O-RAN) architecture. In an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP or the CU-UP), the DU, and the RU in this application may be implemented by using a software module, a hardware module, or a combination of a software module and a hardware module.

The base station may be fixed or movable. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In embodiments of this application, an apparatus configured to implement a function of the network device may be a network device, or may be an apparatus that can support the network device in implementing the function, for example, a chip system or a chip. The apparatus may be mounted in the network device. In embodiments of this application, the chip system may include a chip, or may include a chip and another discrete component. In embodiments of this application, an example in which the apparatus for implementing the function of the network device is the network device is merely used for description, and constitutes no limitation on the solutions in embodiments of this application.

The network device and the terminal device may be deployed on land, including an indoor device or an outdoor device, a handheld device, or a vehicle-mounted device; or may be deployed on a water surface; or may be deployed on a plane, a balloon, and a satellite in the air. Scenarios in which the network device and the terminal device are located are not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

First, a communication system applicable to embodiments of this application is briefly described below.

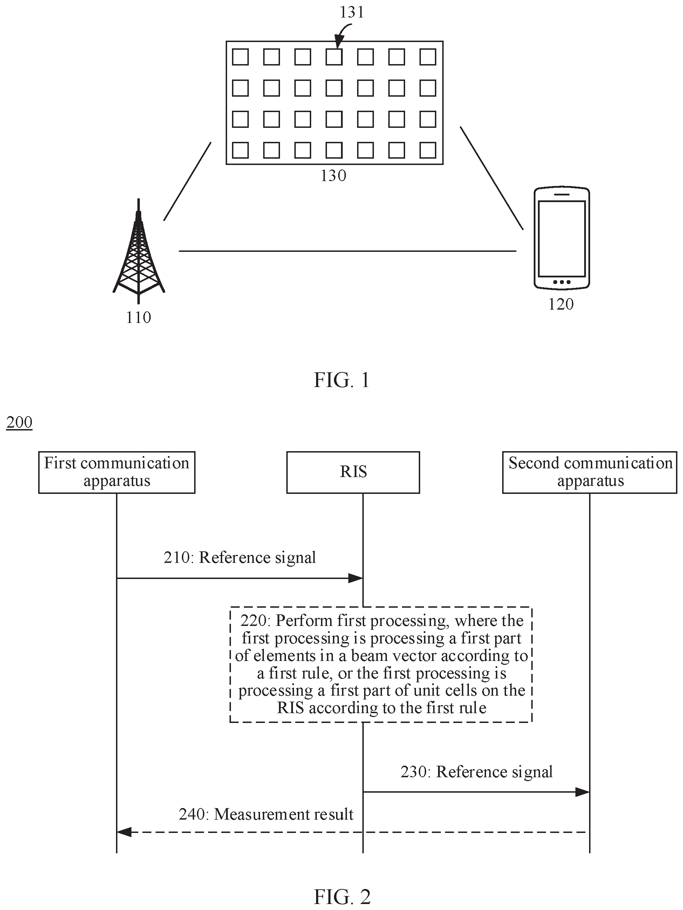

FIG. 1 is a diagram of a wireless communication system applicable to an embodiment of this application.

As shown in FIG. 1, the wireless communication system includes at least one network device, for example, a network device 110 shown in FIG. 1. The wireless communication system may further include at least one terminal device, for example, a terminal device 120 shown in FIG. 1. A plurality of antennas may be configured for both the network device and the terminal device, and the network device and the terminal device may communicate with each other by using a multi-antenna technology.

As shown in FIG. 1, the wireless communication system further includes a reconfigurable intelligent surface (reconfigurable intelligent surface, RIS) 130. The RIS may be used to assist in communication between devices, for example, between a network device and a terminal device. For example, if a transmitting end (for example, a network device or a terminal device) cannot directly communicate with a receiving end (for example, a network device or a terminal device), or a signal is weak during direct communication, for example, when there is an obstacle between the transmitting end and the receiving end, the communication may be implemented via the RIS.

The RIS may be referred to as an RIS apparatus, or may be referred to as an intelligent reflective surface (intelligent reflective surface, IRS) or a large intelligent surface (large intelligent surface, LIS). The RIS is made from artificial sub-wavelength two-dimensional material, usually includes metal, a medium, and an adjustable element, and may be equivalently represented as a radio link control (radio link control, RLC) circuit. A physical property such as capacitive reactance, impedance, or inductive reactance of an electromagnetic unit is adjusted, to change a radiation characteristic of the RIS. This can implement unconventional physical phenomena such as irregular reflection, negative refraction, wave absorption, focusing, and polarization conversion, so that an electromagnetic wave is dynamically adjusted and controlled. The RIS may generate an electromagnetic behavior needed by each electromagnetic unit by controlling a bias voltage of a varactor, a PIN switch, a micro-electro-mechanical system (micro-electro-mechanical system, MEMS) switch, a liquid crystal, graphene, and the like.

The RIS may be considered as a reflective panel. The reflective panel is represented as a smart panel including a plurality of antenna unit cells 131 (briefly referred to as unit cells). Each unit cell may be used as a passive reflective device. Wireless channel fading can be controlled by flexibly configuring a parameter (for example, an amplitude and/or a phase) of each unit cell, and a desired directional beam is formed. A unit cell of the RIS described below represents a unit cell on the RIS, or is referred to as a unit cell in the RIS.

The RIS may be mounted in various environments. For example, the RIS is mounted on a large plane (for example, an indoor wall or ceiling, or an outdoor building or sign), to reflect radio frequency (radio frequency, RF) energy around an obstacle, and create a virtual line of sight (line of sight, LoS) propagation path between a communication source and a target. For example, advantages of the RIS may include the following aspects:
(1) Spectral efficiency enhancement: Through intelligent control of unit cells, the RIS can further improve communication quality of a radio link, enhance strength of a useful signal of the receiving end, and reduce channel interference strength, thereby providing a breakthrough point for implementation of an overall intelligent network in the future.
(2) Reduced power consumption and device complexity: The RIS may passively reflect a received signal, a transmission unit and a receiving unit may not need to be configured at an RIS end, and data does not need to be encoded or decoded. Therefore, complexity of an actual hardware device of the RIS may be greatly reduced compared with that of a network device and a terminal device, to reduce system energy consumption of a wireless network.
(3) Easy deployment: The RIS can be easily deployed on surfaces of various buildings, indoor walls, platforms, roadside billboards, high-speed road signs, and vehicle windows because the RIS includes only an electromagnetic device for passive reflection. In addition, the RIS can be removed or re-deployed at any time based on network requirements.
(4) Compatibility: The RIS can be considered as a supplementary device in the existing network. Therefore, an existing protocol is not affected, and an existing device does not need to be modified. The RIS has the compatibility.
(5) Full-duplex: Compared with a relay (relay) system running in a half-duplex mode, the RIS may perform only passive reflection. Therefore, the RIS may run in a full-duplex mode, to improve spectral efficiency.

The foregoing descriptions of the RIS are merely an example for description. This is not limited in embodiments of this application. In addition, in the following embodiments, the RIS is mainly used as an example for description. However, any device or apparatus that can implement a function of the RIS is applicable to embodiments of this application.

In addition, FIG. 1 is merely a diagram. The wireless communication system may further include another device, for example, may further include a core network device, a wireless relay device and/or a wireless backhaul device, and more network devices and terminal devices, which are not shown in FIG. 1.

For ease of better understanding the technical solutions of this application, some related technologies in the technical solutions of this application are described.

1: Reference signal (reference signal, RS): may also be referred to as a pilot (pilot), a reference sequence, a base signal, or the like. For unification, the following uses a reference signal for description. The reference signal is a physical signal that carries a sequence and that is sent for implementing a specific function. Specifically, the reference signal is a physical signal generated after a specific sequence is mapped to a corresponding resource in a preset resource mapping manner.

In a multiple-input multiple-output (multiple-input multiple-output, MIMO) system, each transmit antenna (a virtual antenna or a physical antenna) has an independent data channel. Based on a foreseen reference signal, a receiving end performs channel estimation for each transmit antenna and restores sent data based on the channel estimation. Channel estimation is a process of reconstructing a received signal to compensate for channel fading and noise. A reference signal pre-known by the transmitting end and the receiving end is used to track time-domain and frequency-domain changes of a channel.

In this application, in an example, the reference signal may be any one of the following: a channel state information reference signal (channel state information reference signal, CSI-RS), a sounding reference signal (sounding reference signal, SRS), a demodulation reference signal (demodulation reference signal, DMRS), a phase tracking reference signal (phase track reference signal, PT-RS), a cell reference signal (cell reference signal, CRS), and the like. The DMRS may be used for demodulation of a physical downlink shared channel (physical downlink shared channel, PDSCH) or a physical uplink shared channel (physical uplink shared channel, PUSCH). The CSI-RS may be used to measure channel information and report channel state information (channel state information, CSI). The channel state information includes at least one of the following: a precoding matrix indicator (precoding matrix indicator, PMI), a rank indication (rank indication, RI), and a channel quality indicator (channel quality indicator, CQI).

It should be understood that the foregoing enumerated reference signals are merely examples, and should not constitute any limitation on this application. This application does not exclude a possibility of defining another reference signal in a future protocol to implement a same or similar function.

2. Beam (beam): is a communication resource. Different beams may be considered as different resources. Same information or different information may be sent by using different beams.

The beam may be embodied in an NR protocol as a spatial domain filter (spatial domain filter), or referred to as a spatial filter (spatial filter) or a spatial parameter (spatial parameter). A beam used to send a signal may be referred to as a transmit beam (transmit beam, Tx beam), and a beam used to receive a signal may be referred to as a receive beam (receive beam, Rx beam).

The transmit beam may refer to signal strength distribution formed in different directions in space after a signal is transmitted through an antenna, and the receive beam may refer to signal strength distribution that is in different directions in space and that is of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

In an example, a plurality of beams that have a same or similar communication feature may be considered as one beam.

One beam may correspond to one or more antenna ports, and is used for transmitting a data channel, a control channel, a sounding signal, and the like. The one or more antenna ports corresponding to the beam may alternatively be considered as one antenna port set.

3. RIS channel estimation: The RIS is usually considered as a passive reflective device, and in the MIMO system, there are usually a large quantity of RIS unit cells (for example, there may be thousands of RIS unit cells). Therefore, directly estimating an RIS channel matrix requires a quantity of pilots in an order of magnitude of RIS unit cells, resulting in an overhead bottleneck. In addition, because the RIS does not have an RF chain for active sending and receiving, and the RIS cannot receive, send, or process a signal, channel state information cannot be obtained by using a conventional channel estimation method; and as a quantity of reflective units increases, a sharp increase in channel dimensions also increases difficulty in obtaining the channel state information.

Without a loss of generality, assuming that the network device has M antennas, the RIS has N unit cells (or referred to as cells), and the terminal device has a single antenna, a signal (after the reference signal is removed) received by the network device may satisfy Formula 1. ${Y}_{all} = {F}^{H} diag \left(W\right) H + {H}_{BS - UE} ∈ {ℂ}^{M \times 1}$ Formula 1

*F^{H}* is a channel between the network device and the RIS (for example, a BS-RIS channel for short), *diag*(*W*) is a weight of the RIS, *H* is a channel between the RIS and the terminal device (for example, an RIS-UE channel for short), and *H_{BS-UE}* is a channel between the network device and the terminal device (for example, a BS-UE channel for short). Embodiments of this application mainly focus on estimating a cascaded channel between the network device, the RIS, and the terminal device (for example, a BS-RIS-UE channel for short). For example, an uplink cascaded channel and a downlink cascaded channel are estimated by sending an uplink reference signal or a downlink reference signal, and then operations such as precoding, modulation order setting, and rank quantity setting may be performed.

4. RIS precoding/beamforming: Similar to a function of a precoding technology in a conventional multi-user MIMO (multi-user MIMO, MU-MIMO) system, channel state information may be properly used through precoding, and a transmit signal is preprocessed to improve receiving performance. For example, parameters (such as a phase and/or an amplitude) of each electromagnetic unit of the RIS are regulated, so that a beam can be adjusted to be transmitted in a specific direction, thereby reducing transmit power of a required signal, improving spectral efficiency, expanding coverage, and weakening interference.

A beamforming design mainly includes precoding and equalization matrix design for a multi-antenna transceiver, to implement directional signal transmission, and introduction of the RIS makes the beamforming design of the system more complex. Based on a programmable characteristic of the RIS, the RIS may be used as an external analog precoder to design a corresponding phase shift matrix. That is, the RIS performs reflection control on a signal from the transmitter through analog beamforming.

The RIS beamforming faces some new challenges compared with conventional beamforming, for example:
(1) There are a large quantity of RIS panel units, and designing a beamforming parameter for each electromagnetic unit causes high complexity. Dimension reduction and grouping are a compromise between beamforming precision and computational complexity.
(2) In RIS communication, a channel has a segmentation characteristic, and active beamforming of the network device and passive beamforming of the RIS need to be jointly designed. When the RIS has a capability of actively measuring a sensing signal, segmented channel CSI may be directly obtained, and a design of beamforming from the transmitting end to the RIS and from the RIS to the receiving end is simple. When the RIS does not have a capability of actively measuring a sensing signal, it is difficult to directly obtain segmented channel CSI, and a design of beamforming from the RIS to the receiving end is a challenging problem.

This application provides an RIS beam training solution. A local change of a codeword (or a beam vector) corresponding to an RIS beam may be controlled, or statuses (or referred to as working statuses) of RIS unit cells may be controlled, to implement switching between a wide beam and a narrow beam, thereby improving beam training efficiency.

Before the solutions of this application are described, the following several points are provided.
(1) In this application, an "indication" may include a direct indication, an indirect indication, an explicit indication, and an implicit indication. When a specific piece of indication information is described as indicating A, it may be understood as that, the indication information carries A, directly indicates A, or indirectly indicates A.

In this application, information indicated by the indication information is referred to as to-be-indicated information. In a specific implementation process, there are manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periodicities and/or sending occasions of these pieces of sub-information may be the same or may be different.

(2) In this application, "sending" and "receiving" indicate signal transmission directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of the chip interface. In other words, sending and receiving may be performed between devices, for example, between a network device and a terminal device, or may be performed within a device. For example, sending or receiving is performed between components, modules, chips, software modules, or hardware modules in a device through a bus, a cable, or an interface.

(3) In embodiments of this application, unless otherwise specified or a logic conflict occurs, terms and/or descriptions in different embodiments are consistent and may be mutually referenced, and technical features in different embodiments may be combined based on an internal logical relationship thereof, to form a new embodiment.

(4) In this application, "first" and "second" are merely for ease of description, and are used to distinguish objects, but are not intended to limit the scope of embodiments of this application, and are not intended to describe an order or a sequence of features. It should be understood that objects described in such a way are interchangeable in an appropriate circumstance, so that a solution other than embodiments of this application can be described.

The following describes in detail methods provided in embodiments of this application with reference to the accompanying drawings. Embodiments provided in this application may be applied to the communication system shown in FIG. 1. This is not limited.

FIG. 2 is a diagram of a signal transmission method 200 according to an embodiment of this application. The method 200 shown in FIG. 2 may include the following steps. In the following embodiments, an RIS is mainly used as an example for description. However, any device or apparatus that can implement a function of the RIS is applicable to embodiments of this application.

210: The RIS receives a reference signal from a first communication apparatus. Correspondingly, the first communication apparatus sends the reference signal.

The first communication apparatus may send the reference signal to a second communication apparatus via the RIS.

In a possible case, the first communication apparatus is a network device or a component (for example, a chip or a circuit) of the network device, and the second communication apparatus is a terminal device or a component (for example, a chip or a circuit) of the terminal device. In this case, the reference signal is a downlink reference signal such as a CSI-RS.

In another possible case, the first communication apparatus is a terminal device or a component (for example, a chip or a circuit) of the terminal device, and the second communication apparatus is a network device or a component (for example, a chip or a circuit) of the network device. In this case, the reference signal is an uplink reference signal such as an SRS. In a further possible case, the first communication apparatus is a terminal device or a component (for example, a chip or a circuit) of the terminal device, and the second communication apparatus is a terminal device or a component (for example, a chip or a circuit) of the terminal device.

In this case, the reference signal is a sidelink (sidelink, SL) reference signal such as a sidelink beam management reference signal.

Optionally, the method 200 further includes step 220.

220: The RIS performs (or executes) first processing, where the first processing is processing a first part of elements in a beam vector according to a first rule, or the first processing is processing a first part of unit cells on the RIS according to the first rule.

The beam vector is a beam vector corresponding to the RIS, or referred to as a beam vector corresponding to a unit cell on the RIS, or referred to as a beam vector corresponding to an RIS beam (namely, a beam used when the RIS sends a reference signal), or briefly referred to as a beam vector of the RIS. The beam vector (or referred to as a matrix, or referred to as a weight coefficient vector, or referred to as a weight coefficient matrix) may be X-dimensional, a vector element corresponds to a unit cell on the RIS, and X is an integer greater than or equal to 1.

In a possible implementation, the beam vector is a preset codebook, for example, a preconfigured codebook or a codebook predefined in a protocol. Based on this, in step 220, the RIS processes the first part of elements in the preset codebook according to the first rule, and a codebook obtained through the processing is not completely the same as the codebook before the processing (namely, the preset codebook), that is, the first part of elements are adjusted. In other words, according to this embodiment of this application, the RIS does not directly reflect the reference signal based on the preset codebook, but reflects the received reference signal based on a codebook obtained by processing the elements in the preset codebook.

In another possible implementation, the beam vector is a preset or preconfigured X-dimensional vector, and elements in the X-dimensional vector are in one-to-one correspondence with unit cells on the RIS. For example, a quantity of unit cells on the RIS is P, and the beam vector may be a P*1 one-dimensional vector, that is, each unit cell may correspond to one element; or the beam vector may be a P*P two-dimensional vector, that is, RIS unit cells may correspond to P elements in the two-dimensional vector, for example, P elements on a diagonal. Alternatively, the beam vector may exist in a form of a codeword. This is not limited.

The first part of elements in the beam vector may represent a part of elements in the beam vector. That is, the RIS processes the part of elements in the beam vector according to the first rule. It may be understood that, in this embodiment of this application, processing of all elements in the beam vector is not excluded, that is, the first part of elements may alternatively include all the elements in the beam vector; and in this embodiment of this application, processing of no elements in the beam vector is not excluded either. This embodiment of this application is applicable provided that the RIS has processed an element in the beam vector according to one rule, or determines, according to one rule, whether to process an element in the beam vector, or determines, according to one rule, which elements in the beam vector are to be processed.

The first part of unit cells on the RIS may represent a part of unit cells on the RIS. That is, the RIS processes the part of unit cells on the RIS according to the first rule. It may be understood that, in this embodiment of this application, processing of all unit cells on the RIS is not excluded, that is, the first part of unit cells may alternatively include all the unit cells on the RIS; and in this embodiment of this application, processing of no unit cells on the RIS is not excluded either. This embodiment of this application is applicable provided that the RIS has processed RIS unit cells according to one rule, or determines, according to one rule, whether to process the RIS unit cells, or determines, according to one rule, which RIS unit cells are to be processed.

If the first processing is processing the first part of elements in the beam vector according to the first rule, in step 220, the RIS processes the first part of elements in the beam vector according to the first rule, in other words, the RIS adjusts (or updates or controls) the first part of elements in the beam vector according to the first rule.

If the first processing is processing the first part of unit cells on the RIS according to the first rule, in step 220, the RIS processes the first part of unit cells on the RIS according to the first rule, in other words, the RIS adjusts (or updates or controls) the first part of unit cells on the RIS according to the first rule.

A specific solution of step 220 is described in detail below.

230: The RIS sends the reference signal to the second communication apparatus.

Specifically, based on the first processing, the RIS sends the reference signal to the second communication apparatus.

For example, in step 220, if the first processing is processing the first part of unit cells on the RIS according to the first rule, that is, the RIS processes the first part of elements in the beam vector according to the first rule, in step 230, the RIS sends (or reflects) the reference signal to the second communication apparatus based on a beam vector obtained through the processing. In other words, the RIS sends (or reflects) the reference signal to the second communication apparatus by using a beam, and a beam vector of the beam is obtained by processing the first part of elements in the beam vector according to the first rule.

For another example, in step 220, if the first processing is processing the first part of unit cells on the RIS according to the first rule, that is, the RIS processes the first part of unit cells on the RIS according to the first rule, in step 230, the RIS sends (or reflects) the reference signal to the second communication apparatus via the processed unit cells. In other words, the RIS sends the reference signal to the second communication apparatus via unit cells on the RIS, and a first part of unit cells in the unit cells on the RIS are obtained through the processing according to the first rule.

Further, optionally, the method 200 further includes step 240.

240: The second communication apparatus sends a measurement result to the first communication apparatus. Specifically, the second communication apparatus may perform measurement (or beam measurement) based on the received reference signal, and send the measurement result (which may also be referred to as a beam measurement result) to the first communication apparatus; or the second communication apparatus may send the measurement result to the first communication apparatus via the RIS, the second communication apparatus may perform measurement (or beam measurement) based on the received reference signal, and send the measurement result (the measurement result may also be referred to as a beam measurement result), and after the RIS receives the measurement result, the RIS sends (or reflects) the measurement result to the first communication apparatus.

In an example, the measurement result includes at least one of the following: a reference signal received power (reference signal received power, RSRP), a signal-to-noise ratio (signal-to-noise ratio, SNR), a signal-to-interference-plus-noise ratio (signal-to-interference-plus-noise ratio, SINR), whether a beam is available, whether a transmit timing needs to be adjusted, whether a receive timing variation exceeds a threshold, a resource identifier or a logical identifier (for example, a capability value (capability value) identifier) of an antenna panel used to obtain the measurement result.

Optionally, the first rule is determined according to a beam grouping policy. Based on this, the first rule is related to the beam grouping policy. Further, optionally, the first rule is related to the beam grouping policy and a total quantity of beams on the RIS.

The beam grouping policy is a grouping policy related to beams on the RIS. When performing beam training via the RIS, the first communication apparatus and the second communication apparatus may perform beam training according to the beam grouping policy.

In an example, the beam grouping policy includes at least one of the following: performing L levels of beam measurement, a beam group or a quantity of beam groups during each level of beam measurement, or a beam or a quantity of beams in each beam group. L is an integer greater than or equal to 1. The following describes the foregoing information.
(1) Performing L levels of beam measurement indicates that L times of beam measurement (or referred to as L rounds of beam measurement, or referred to as L rounds of beam sweeping) are performed during beam measurement (or referred to as beam training, or referred to as beam sweeping). For example, the first communication apparatus sends reference signals to the second communication apparatus L times (or referred to as L rounds) via the RIS, and the second communication apparatus may perform beam measurement based on a reference signal received each time (or referred to as each round), and feed back a measurement result during each time of beam measurement (or referred to as each round of beam measurement). It should be noted that a quantity of reference signals transmitted during each time of beam measurement is not limited in this embodiment of this application. For example, each time beam measurement is performed, the first communication apparatus may send a plurality of reference signals to the second communication apparatus via the RIS. Performing the L levels of beam measurement is designed, so that a quantity of beams during the times of beam measurement is less than a quantity of beams during one time of beam measurement, thereby reducing beam measurement overheads.

Further, optionally, if determining, according to the beam grouping policy, to perform L levels of beam measurement, in step 230, the RIS sends a reference signal to the second communication apparatus by using an i^{th} level of beam. A beam vector corresponding to the i^{th} level of beam is obtained by processing a first part of elements in the beam vector according to the first rule; or when the RIS sends a reference signal to the second communication apparatus by using an i^{th} level of beam, unit cells on the RIS are obtained by processing a first part of unit cells on the RIS according to the first rule. i=1, 2, ..., L.

(2) The beam group for each level of beam measurement indicates a beam group during each of the L levels of beam measurement during the L levels of beam measurement.

An i^{th} level is used as an example. In an example, information about a beam group during the i^{th} level of beam measurement includes at least one of the following: a quantity of beam groups during the i^{th} level of beam measurement, an identifier of the beam group during the i^{th} level of beam measurement, a quantity of beams in the beam group during the i^{th} level of beam measurement, or a beam identifier in the beam group during the i^{th} level of beam measurement.

A quantity of beam groups during each level of beam measurement may be the same or may vary. If the quantity of beam groups during each level of beam measurement is uniform, for the quantity of beam groups, the beam grouping policy may include a parameter (for example, G), where G represents the quantity of beam groups during each level of beam measurement. If the quantity of beam groups during each level of beam measurement varies, for the quantity of beam groups, the beam grouping policy may include L parameters (for example, Gi, where i=1, 2, ..., L), where Gi represents a quantity of beam groups during an i^{th} level of beam measurement.

(3) The beam in each beam group indicates a beam included in a beam group in each of the L levels of beam measurement during the L levels of beam measurement.

In an example, information about the beam in each beam group includes at least one of the following: a quantity of beams in the beam group and a beam identifier in the beam group. A quantity of beams in each beam group may be uniform (for example, quantities of beams in beam groups during a same level of beam measurement are the same, or quantities of beams in beam groups during L levels of beam measurement are the same), or may vary. If the quantity of beams in each beam group is uniform, for the quantity of beams in each beam group, the beam grouping policy may include a parameter (for example, K), where K represents the quantity of beams in each beam group. If quantities of beams in beam groups during a same level of beam measurement are the same, and quantities of beams in beam groups during different levels of beam measurement are different, the beam grouping policy may include L parameters (for example, Ki, where i=1, 2, ..., L), where Ki represents a quantity of beams in a beam group during an i^{th} level of beam measurement.

It may be understood that the foregoing is an example for description, and this is not limited. For example, the beam grouping policy includes performing L levels of beam measurement and beams used for each level of beam measurement. That is, beams may not be grouped during each level of beam measurement.

Optionally, the beam grouping policy is determined based on capability information of the RIS.

Specifically, the control apparatus determines the capability information of the RIS (or briefly referred to as capability information), and determines the beam grouping policy based on the capability information of the RIS. In an example, the capability information of the RIS includes at least one of the following: horizontal and vertical coverage angles (for example, maximum horizontal and vertical coverage angles) of the RIS, an angular resolution, a size of the RIS, or a total quantity of beams on the RIS. The size of the RIS may include, for example, a quantity of unit cells on the RIS (that is, a quantity of unit cells included on the RIS).

In an example, the control apparatus may be any one of the following: a first communication apparatus, a second communication apparatus, or an RIS; or the control apparatus may be deployed in any one of the following: a first communication apparatus, a second communication apparatus, or an RIS. The control apparatus may have the following several possible cases.

In a first possible case, the control apparatus is deployed on a network side. For example, the control apparatus is a network device or a component (for example, a chip or a circuit) of the network device. In this case, the RIS may send capability information of the RIS to the control apparatus, so that the control apparatus can determine the beam grouping policy based on the capability information.

In this case, further, optionally, the control apparatus sends the beam grouping policy to the first communication apparatus and/or the RIS. If the control apparatus sends the beam grouping policy to the first communication apparatus, the first communication apparatus may further send the beam grouping policy to the RIS. Similarly, if the control apparatus sends the beam grouping policy to the RIS, the RIS may further send the beam grouping policy to the first communication apparatus. The second communication apparatus may alternatively obtain the beam grouping policy. This is not limited.

In this case, further, optionally, the control apparatus indicates the first rule to the RIS. The control apparatus may directly indicate the first rule to the RIS, or may indicate the first rule to the RIS via another apparatus. This is described in detail below with reference to third indication information.

In a second possible case, the control apparatus is deployed on a terminal side. For example, the control apparatus is a terminal device or a component (for example, a chip or a circuit) of the terminal device. In this case, the RIS may send capability information of the RIS to the control apparatus, so that the control apparatus can determine the beam grouping policy based on the capability information. In this case, further, optionally, the control apparatus sends the beam grouping policy to the first communication apparatus and/or the RIS. For details, refer to the descriptions in the first possible case. Further, optionally, the control apparatus indicates the first rule to the RIS.

In a third possible case, the control apparatus is deployed on an RIS side. For example, the control apparatus is an RIS or a component (for example, a chip or a circuit) of the RIS. In this case, the control apparatus may read capability information of the RIS, so that the control apparatus can determine the beam grouping policy based on the capability information. In this case, further, optionally, the control apparatus sends the beam grouping policy to the first communication apparatus. Further, optionally, the first communication apparatus or the second communication apparatus indicates the first rule to the RIS.

The foregoing is an example for description, and this is not limited. For example, the control apparatus may alternatively be deployed in a third party.

The following describes in detail a specific solution of step 220 with reference to the first rule. The first rule may include the following two solutions.

Solution 1: The first rule indicates (or is used to indicate) that the first part of elements in the beam vector are processed, that is, the first processing is processing the first part of elements in the beam vector according to the first rule. In this solution, in step 220, the RIS processes the first part of elements in the beam vector according to the first rule.

Solution 2: The first rule indicates (or is used to indicate) that the first part of unit cells on the RIS are processed, that is, the first processing is processing the first part of unit cells on the RIS according to the first rule. In this solution, in step 220, the RIS processes the first part of unit cells on the RIS according to the first rule.

The following separately describes the two solutions.

Solution 1: The first rule indicates that the first part of elements in the beam vector are processed. For ease of differentiation, the first rule in Solution 1 is referred to as a rule #A, that is, the rule #A indicates to process the first part of elements in the beam vector.

Based on this solution, when the first communication apparatus sends the reference signal to the second communication apparatus via the RIS, the RIS receives the reference signal from the first communication apparatus, and may send the reference signal to the second communication apparatus by using a beam obtained through processing according to the rule #A. In this way, a weight vector of the beam does not need to be reconfigured, the elements in the beam vector may be directly adjusted according to the rule #A, to implement switching between a wide beam and a narrow beam, thereby reducing beam training overheads, and improving beam training efficiency.

In the following, for ease of description, the first part of elements are referred to as elements #A, that is, the rule #A indicates to process the elements #A in the beam vector. It should be noted that, that the rule #A indicates to process the elements #A in the beam vector is mentioned a plurality of times below, and may alternatively be replaced as follows: The elements #A in the beam vector are processed according to the rule #A.

That the rule #A indicates to process the elements #A in the beam vector may be processing the elements #A in the beam vector according to the rule #A, so that the elements #A before the processing are different from processed elements #A. Optionally, the rule #A indicates to zero the elements #A in the beam vector. Based on this, in step 220, the RIS zeroes the elements #A in the beam vector according to the first rule. A zeroing operation is performed on the part of elements in the beam vector, so that the RIS beam can be switched between a wide beam and a narrow beam. The zeroing operation is an example for description. Embodiments of this application are not limited thereto. For example, the zeroing operation may alternatively be another operation, for example, a phase inversion operation or a set-to-one operation. For ease of understanding and description, the following uses the zeroing operation as an example for description.

The zeroing operation includes at least the following two cases.

In a first possible case, zeroing is performed at a fixed spacing. In this case, the elements #A include equally spaced elements.

An example in which the beam vector is a two-dimensional vector is used. For example, the rule #A indicates to zero a plurality of rows of elements in the beam vector, that is, the plurality of rows of elements in the beam vector are zeroed according to the rule #A, where a row spacing between every two adjacent rows in the plurality of rows is uniform. For another example, the rule #A indicates to zero a plurality of columns of elements in the beam vector, that is, the plurality of columns of elements in the beam vector are zeroed according to the rule #A, where a column spacing between every two adjacent columns in the plurality of columns is uniform.

For ease of description, Δ1 is used to represent the foregoing spacing. In an example, Δ1 is an integer greater than 0. For example, Δ1=2ⁿ, where n is an integer greater than or equal to 0. For example, Δ1 is any one of the following: 2, 4, 8, and 16.

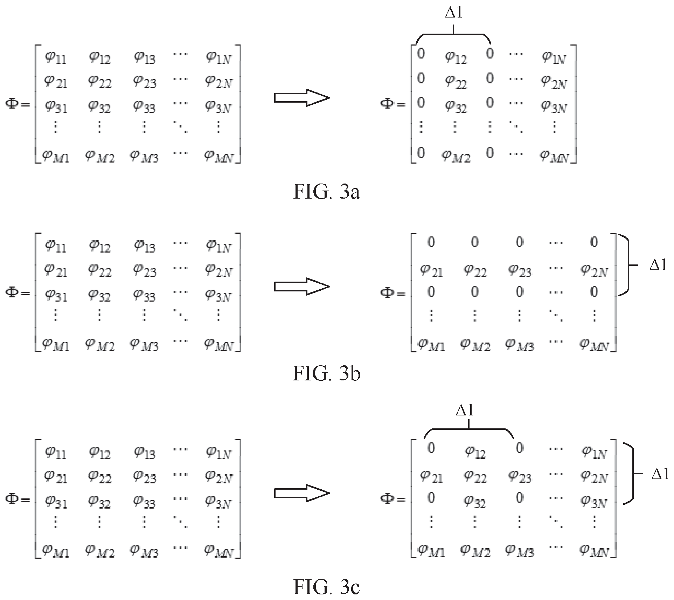

FIG. 3a to FIG. 3c are a diagram of performing zeroing at a fixed spacing applicable to an embodiment of this application. As shown in FIG. 3a to FIG. 3c, Φ is used to represent a beam vector. The beam vector is an M×N two-dimensional vector, M is a quantity of rows, N is a quantity of columns, and M and N are integers greater than 1. In an example, M*N=P, and P is a quantity of unit cells on an RIS. Elements #A are a part of elements in the beam vector, in other words, elements #A are a part of elements in the M×N two-dimensional vector.

In an example, the elements #A include n columns and m rows of elements, and a column spacing between two adjacent columns of elements in the n columns is Δ1, where n is an integer greater than 1 and less than or equal to N, and m is an integer greater than or equal to 1 and less than or equal to M.

As shown in FIG. 3a, the elements #A include n columns and M rows of elements, and a column spacing between two adjacent columns of elements in the n columns is Δ1. In this example, elements in each of the n columns may be zeroed. For example, a zeroing operation is performed on all elements in a 1^{st} column, all elements in a (1+Δ1)^{th} column, all elements in a (1+2Δ1)^{th} column, all elements in a (1+3Δ1)^{th} column, and the like. In this example, Δ1 may be in a one-dimensional form, to be specific, Δ1 is a spacing (or referred to as a column spacing) between elements to be zeroed in a vertical direction.

In another example, the elements #A include n columns and m rows of elements, and a spacing between two adjacent rows of elements in the m rows is Δ1, where n is an integer greater than or equal to 1 and less than or equal to N, and m is an integer greater than 1 and less than or equal to M.

As shown in FIG. 3b, the elements #A include N columns and m rows of elements, and a spacing between two adjacent rows of elements in the m rows is Δ1. In this example, elements in each of the m rows may be zeroed. For example, a zeroing operation is performed on all elements in a 1^{st} row, all elements in a (1+Δ1)^{th} row, all elements in a (1+2Δ1)^{th} row, all elements in a (1+3Δ1)^{th} row, and the like. In this example, Δ1 may be in a one-dimensional form, to be specific, Δ1 is a spacing (or referred to as a row spacing) between elements to be zeroed in a horizontal direction.

In another example, the elements #A include n columns and m rows of elements, a spacing between two adjacent rows of elements in the m rows is Δ1ₕ, and a spacing between two adjacent columns of elements in the n columns is Δ1ᵥ, where n is an integer greater than 1 and less than or equal to N, and m is an integer greater than 1 and less than or equal to M. Δ1ₕ and Δ1ᵥ may be the same or may be different. The following uses an example in which Δ1ₕ and Δ1ᵥ are the same, that is, both are Δ1 for description.

As shown in FIG. 3c, the elements #A include n columns and m rows of elements, a spacing between two adjacent rows of elements in the m rows is Δ1, and a spacing between two adjacent columns of elements in the n columns is Δ1. In this example, elements in the m rows and the n columns may be zeroed. In this example, Δ1 may be in a two-dimensional form, to be specific, Δ1 includes a spacing between elements to be zeroed in the horizontal direction and a spacing between elements to be zeroed in the vertical direction (namely, a row spacing and a column spacing).

The foregoing provides example descriptions with reference to FIG. 3a to FIG. 3c. Embodiments of this application are not limited thereto. For example, a start row may be an i^{th} row, where i is an integer greater than 1 and less than M. For another example, a start column may be a j^{th} column, where j is an integer greater than 1 and less than N.

In a second possible case, consecutive intervals are zeroed. In this case, the elements #A include consecutive elements.

An example in which the beam vector is a two-dimensional vector is used. For example, the rule #A indicates to zero a plurality of consecutive rows of elements in the beam vector, that is, the plurality of consecutive rows of elements in the beam vector are zeroed according to the rule #A. For another example, the rule #A indicates to zero a plurality of consecutive columns of elements in the beam vector, that is, the plurality of consecutive columns of elements in the beam vector are zeroed according to the rule #A.

For ease of description, Δ2 is used to represent an interval length of consecutive intervals, for example, a quantity of a plurality of consecutive rows, or a quantity of a plurality of consecutive columns. In an example, Δ2 is an integer greater than 1.

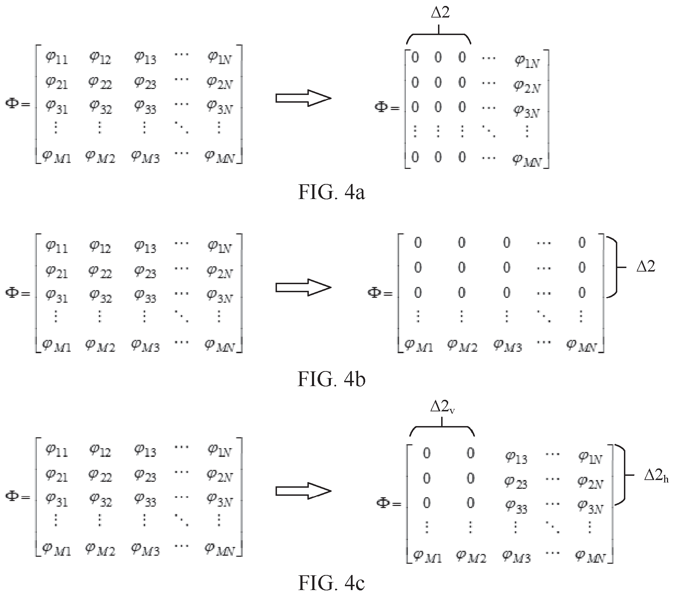

FIG. 4a to FIG. 4c are a diagram of performing zeroing at consecutive intervals applicable to an embodiment of this application. As shown in FIG. 4a to FIG. 4c, Φ is used to represent a beam vector. The beam vector is an M×N two-dimensional vector, M is a quantity of rows, N is a quantity of columns, and M and N are integers greater than 1. Elements #A are a part of elements in the beam vector, in other words, elements #A are a part of elements in the M×N two-dimensional vector.

In an example, the elements #A include n columns and m rows of elements, and the n columns are consecutive Δ2 columns, where n is an integer greater than 1 and less than or equal to N, and m is an integer greater than or equal to 1 and less than or equal to M. As shown in FIG. 4a, the elements #A include Δ2 consecutive columns of elements. In this example, the Δ2 consecutive columns of elements from a 1^{st} column may be zeroed. In this example, Δ2 may be in a one-dimensional form, to be specific, Δ2 is a column length (or referred to as a column quantity) for consecutive zeroing.

In another example, the elements #A include n columns and m rows of elements, the m rows are consecutive Δ2 rows, n is an integer greater than or equal to 1 and less than or equal to N, and m is an integer greater than 1 and less than or equal to M. As shown in FIG. 4b, the elements #A include Δ2 consecutive rows of elements. In this example, the Δ2 consecutive rows of elements from a 1^{st} row may be zeroed. In this example, Δ2 may be in a one-dimensional form, to be specific, Δ2 is a row length (or referred to as a row quantity) for consecutive zeroing.

In another example, the elements #A include n columns and m rows of elements, the m rows are Δ2ₕ consecutive rows, the n columns are Δ2ᵥ consecutive columns, where n is an integer greater than 1 and less than or equal to N, and m is an integer greater than 1 and less than or equal to M. Δ2ₕ and Δ2ᵥ may be the same or may be different. As shown in FIG. 4c, the elements #A include Δ2ₕ consecutive rows and Δ2ᵥ consecutive columns of elements. In this example, the Δ2ₕ consecutive rows of elements from a 1^{st} row and the Δ2ᵥ consecutive columns of elements from a 1^{st} column may be zeroed. In this example, Δ2 may be in a two-dimensional form, to be specific, Δ2 includes a column length (or referred to as a column quantity) Δ2ᵥ for consecutive zeroing and a row length (or referred to as a row quantity) Δ2ₕ for consecutive zeroing.

The foregoing provides example descriptions with reference to FIG. 4a to FIG. 4c. Embodiments of this application are not limited thereto. For example, a start row in which zeroing is to be performed may be an i^{th} row, where i is an integer greater than 1 and less than M. For another example, a start column in which zeroing is to be performed may be a j^{th} column, where j is an integer greater than 1 and less than N. For another example, the elements #A may include a plurality of elements from *φₘₙ,* and a spacing between every two adjacent elements in the plurality of elements is Δ2 elements.

The foregoing two cases are examples for description, and this is not limited. For example, zeroing may alternatively be performed at different spacings.

Optionally, there is an association relationship between the elements #A and the beam grouping policy (for differentiation, the association relationship is referred to as an association relationship #A). In this way, the elements #A may be learned of based on the beam grouping policy and the association relationship #A, or the beam grouping policy may be learned of based on the elements #A and the association relationship #A.

The association relationship #A may exist, for example, may be stored or transmitted, in a form of a table, a function, a text, or a character string. For example, examples in which the association relationship #A is presented in a form of a table are described with reference to two cases.

Case 1: Perform zeroing at a fixed spacing.

In this case, the association relationship #A may be shown in Table 1.

**Table 1**

| BM level | Zeroing spacing |
|---|---|
| 1 | Δ11 |
| 2 | Δ12 |
| 3 | Δ13 |

The beam management level (beam management level, BM level) indicates that the foregoing L levels of beam measurement are performed. In the example shown in Table 1, L=3, that is, three levels of beam measurement are performed. The zeroing spacing in Table 1 is Δ1 described above. As described above, Δ1 may be in the one-dimensional form. Specifically, Δ1 is the spacing (or referred to as the row spacing) between the elements to be zeroed in the horizontal direction, or Δ1 is the spacing (or referred to as the column spacing) between the elements to be zeroed in the vertical direction. Alternatively, Δ1 may be in the two-dimensional form. Specifically, Δ1 includes the spacing between the elements to be zeroed in the horizontal direction and the spacing between the elements to be zeroed in the vertical direction (namely, the row spacing and the column spacing).

Table 1 is used as an example. During a first level of beam measurement, zeroing may be performed at a zeroing spacing of Δ11. For example, during the first level of beam measurement, the RIS may zero elements at a spacing of Δ11 rows from a 1^{st} row of the beam vector. For another example, during the first level of beam measurement, the RIS may zero elements at a spacing of Δ11 columns from a 1^{st} column of the beam vector. Starting from the 1^{st} row or the 1^{st} column may be predefined, preconfigured, or indicated. This is not limited.

Table 1 is an example for description, and this is not limited. For example, Table 1 may further include a start position, namely, a start position of an element that starts to be zeroed. For example, the start position in Table 1 is a row number (or referred to as an index or an identifier). For example, a start position corresponding to the first level of beam measurement is a number of the 1^{st} row. In this case, during the first level of beam measurement, elements at a spacing of Δ11 rows from the 1^{st} row may be zeroed, that is, elements in the 1^{st} row, a (1+Δ11)^{th} row, a (2+Δ11)^{th} row, and the like are zeroed. For another example, the start position in Table 1 is a column number. For example, a start position corresponding to the first level of beam measurement is a number of the 1^{st} column. In this case, during the first level of beam measurement, elements at a spacing of Δ11 columns from the 1^{st} column may be zeroed, that is, elements in the 1^{st} column, a (1+Δ11)^{th} column, a (2+Δ11) ^{th} column, and the like are zeroed. For another example, the start position in Table 1 is two-dimensional, for example, a row number and a column number. For the row number, for example, rows may be sequentially numbered from the 1^{st} row in the beam vector; and similarly, for the column number, for example, columns may be sequentially numbered from the 1^{st} column in the beam vector. Similarly, elements in the beam vector may alternatively be numbered. For example, elements in each column or each row may be independently numbered; or all elements may alternatively be jointly numbered. For example, from an element in a first row and a first column, elements are sequentially numbered in a manner of rows then columns (or columns then rows); or numbers of elements are predefined.

Case 2: Perform zeroing based on consecutive intervals.

In this case, the association relationship #A may be shown in Table 2.

**Table 2**

| BM level | Zeroing interval |
|---|---|
| 1 | {ID_{i1,j1}, Δ21} |
| 2 | {ID_{i2,j2}, Δ22} |
| 3 | {ID_{i3,j3}, Δ23} |

The zeroing interval in Table 2 includes a start position ID_{i,j} of a to-be-zeroed element, where ID_{i,j} may be used to identify a start element *φᵢⱼ* (namely, a 1^{st} element in the elements #A). For example, ID_{i,j} is a number of the start element *φᵢⱼ*. As described above, the elements in the beam vector may have corresponding numbers. For example, the elements in each row or each column are independently numbered. For another example, the elements in the beam vector are jointly numbered. For another example, the numbers of the elements are predefined. This is not limited. The zeroing interval in Table 2 further includes a length for consecutive zeroing, and the length is Δ2 described above. As described above, Δ2 may be in a one-dimensional form (for example, Δ2 is a column length for consecutive zeroing; for another example, Δ2 is a row length for consecutive zeroing), or may be in a two-dimensional form (for example, Δ2 is a column length and a row length that are for consecutive zeroing). This is not limited.

Table 2 is used as an example. During a first level of beam measurement, zeroing may be performed by using a start position of ID_{i1,j1} and a length Δ21 for consecutive zeroing. For example, during the first level of beam measurement, elements in Δ21 consecutive rows from a row in which ID_{i1,j1} is located may be zeroed. For another example, during the first level of beam measurement, elements in Δ21 consecutive columns from a column in which ID_{i1,j1} is located may be zeroed. For another example, during the first level of beam measurement, elements in Δ21 consecutive rows and elements in Δ21 consecutive columns from a row and a column in which ID_{i1,j1} is located may be zeroed.

Table 2 is an example for description, and this is not limited thereto. For example, Table 2 may further include more parameters. For example, Table 2 includes two lengths for zeroing, which respectively indicate a column length for consecutive zeroing and a row length for consecutive zeroing. For another example, Δ2 (namely, Δ21 to Δ23) in Table 2 may alternatively represent a total quantity of elements that are consecutively zeroed. The first level of beam measurement is used as an example, Δ21 consecutive elements from the start element *φᵢⱼ* identified by ID_{i1,j1} (for example, Δ21 consecutive elements in rows then columns; for another example, Δ21 consecutive elements in columns then rows) may be zeroed. For another example, the start position ID_{i,j} in Table 2 may be replaced with IDᵢ or IDⱼ. IDᵢ is used to identify a row in which the start element is located, and IDⱼ is used to identify a column in which the start element is located. In this manner, a 1^{st} element or a specific element in the row identified by IDᵢ or the column identified by IDⱼ may be considered as a start element by default. For another example, the start position in Table 2 may be replaced with an end position (that is, a last element in the elements #A), a middle position (that is, a middle element in the elements #A), or the like.

The foregoing describes the association relationship #A with reference to the two cases. It may be understood that all variations of the foregoing solution are applicable to embodiments of this application. For example, an association relationship between the elements that do not need to be zeroed and the beam grouping policy may alternatively be defined.

In addition, in an example, the association relationship #A may be time-constrained. Specifically, the association relationship #A may be associated with a time period, and the association relationship #A is valid within the time period. That is, within the time period, the RIS may determine the elements #A based on the association relationship #A and the beam grouping policy, or the RIS may determine the beam grouping policy based on the association relationship #A and the elements #A.

Optionally, the RIS receives first indication information, where the first indication information indicates the elements #A, or the first indication information indicates positions (or position information) of the elements #A. Specifically, the control apparatus or the communication apparatus (for example, the first communication apparatus or the second communication apparatus) sends the first indication information, and the RIS receives the first indication information, and learns, based on the first indication information, of the elements that need to be processed, for example, the elements that need to be zeroed. The first indication information may directly indicate the elements #A, or may indirectly indicate the elements #A. This is not limited.

In an example, the first indication information may be carried in at least one of the following signaling: radio resource control (radio resource control, RRC), media access control (media access control, MAC) (for example, a media access control-control element (media access control-control element, MAC CE)), or downlink control information (downlink control information, DCI).

The following describes several possible implementations.

In a first possible implementation, the first indication information indicates (for example, includes) at least one of the following: an ending element number in the elements #A, a starting element number in the elements #A, a total quantity of elements included in the elements #A, or a spacing between adjacent elements in the elements #A. Specifically, it may be assumed that the beam vector is the preset codebook. In this way, the RIS may learn of corresponding positions based on the at least one of the foregoing information indicated by the first indication information, to determine the elements #A.

An example in which the beam vector is a two-dimensional vector is used. The foregoing information may be one-dimensional or two-dimensional. Specifically, the number of the start element (namely, the 1^{st} element) in the elements #A may be a number of a row in which the start element is located (namely, a number of a start row), or may be a number of a column in which the start element is located (namely, a number of a start column), or may be a specific element (for example, *φᵢⱼ*) in the two-dimensional vector. The number of the end element (namely, the last element) in the elements #A may be a number of a row in which the end element is located (namely, a number of an end row), or may be a number of a column in which the end element is located (namely, a number of an end column), or may be a position of a specific element (for example, *φᵢⱼ*) in the two-dimensional vector. The total quantity of elements included in the elements #A may be a total quantity of rows in which to-be-zeroed elements are located, or may be a total quantity of columns in which to-be-zeroed elements are located, or may be a total quantity of to-be-zeroed elements. The spacing between the adjacent elements in the elements #A may be a spacing between adjacent rows in rows in which to-be-zeroed elements are located, or may be a spacing between adjacent columns in columns in which to-be-zeroed elements are located, or may be a spacing between adjacent elements to be zeroed in the two-dimensional vector.

The following provides descriptions with reference to two cases.

Case 1: Perform zeroing at a fixed spacing.

In this case, in an example, the first indication information indicates (for example, includes) a zeroing spacing (that is, the spacing between the adjacent elements in the elements #A) and/or a start position (that is, the number of the start element in the elements #A). For example, as shown in FIG. 3a, the first indication information includes Δ1. In this case, elements at a spacing of Δ1 columns may be zeroed from a 1^{st} column by default.

Case 2: Perform zeroing based on consecutive intervals.

In this case, in an example, the first indication information indicates (for example, includes) a zeroing interval (that is, the total quantity of elements included in the elements #A) and/or a start position (that is, the number of the start element in the elements #A). For example, as shown in FIG. 4a, the first indication information includes Δ2. In this case, elements in Δ2 consecutive columns from a 1^{st} column may be zeroed by default.

The foregoing is briefly described with reference to the two cases. This is not limited. For example, the first indication information may include an end position and a zeroing interval or a zeroing spacing. In this way, positions of all elements to be zeroed may alternatively be determined based on the end position and the zeroing interval or the zeroing spacing. For another example, the first indication information may include an end position, and it is assumed that the start position is default. In this way, all elements that need to be zeroed may alternatively be determined based on the end position and the default start position.

In a second possible implementation, the first indication information includes a beam grouping policy, and the beam grouping policy has an association relationship with the elements #A. Specifically, the RIS may learn of the elements #A based on the beam grouping policy and the association relationship.

For the association relationship between the beam grouping policy and the elements #A, refer to the foregoing association relationship #A, as shown in Table 1 or Table 2. Details are not described herein again.

Further, the association relationship between the beam grouping policy and the elements #A may be predefined, preconfigured, or indicated. This is not limited. If the association relationship #A is indicated, the association relationship #A and the beam grouping policy may be carried in same signaling, or may be carried in different signaling. This is not limited.

In a third possible implementation, the first indication information includes a bitmap (bitmap), and the position information of the elements #A is indicated by using the bitmap.

For example, the beam vector is a two-dimensional vector. The bitmap may be one-dimensional (that is, the bitmap indicates a row or column in which zeroing is performed), or may be two-dimensional (that is, the bitmap indicates a row and a column in which zeroing is performed). It is assumed that the beam vector is an M×N two-dimensional vector, M is a quantity of rows, and N is a quantity of columns.

For example, a bitmap with M bits indicates a row in which zeroing needs to be performed. Specifically, each bit (bit) represents one row. It is assumed that a bit value "1" indicates that zeroing needs to be performed, and a bit value "0" indicates that the zeroing does not need to be performed. Assuming that M=14, if the bitmap is 00001100001100, it indicates that elements in a 5^{th} row, a 6^{th} row, an 11^{th} row, and a 12^{th} row need to be zeroed, and elements in remaining rows do not need to be zeroed.

For another example, a bitmap with N bits indicates a column in which zeroing needs to be performed. Specifically, each bit represents one column. It is assumed that a bit value "1" indicates that zeroing needs to be performed, and a bit value "0" indicates that the zeroing does not need to be performed. Assuming that N=12, if the bitmap is 100001000011, it indicates that elements in a 1^{st} column, a 6^{th} column, an 11^{th} column, and a 12^{th} column need to be zeroed, and elements in remaining columns do not need to be zeroed.

For another example, a bitmap with (N+M) bits indicates a row and a column in which zeroing needs to be performed, or two bitmaps may respectively indicate the row and the column in which the zeroing needs to be performed. For details, refer to the foregoing examples.

The foregoing describes a solution related to Solution 1, and the following describes a solution related to Solution 2.

Solution 2: The first rule indicates that the first part of unit cells on the RIS are processed. For ease of differentiation, the first rule in Solution 2 is referred to as a rule #B, that is, the rule #B indicates to process the first part of unit cells on the RIS.

Based on this solution, when the first communication apparatus sends the reference signal to the second communication apparatus via the RIS, the RIS receives the reference signal from the first communication apparatus, and may send the reference signal to the second communication apparatus by using a beam obtained through processing according to the rule #B. In this way, a weight vector of the beam does not need to be reconfigured, and switching between a wide beam and a narrow beam can be directly implemented according to the rule #B, thereby reducing beam training overheads, and improving beam training efficiency.

In the following, for ease of description, the first part of unit cells are referred to as unit cells #B, that is, the rule #B indicates to process the unit cells #B on the RIS. It should be noted that, that the rule #B indicates to process the unit cells #B on the RIS is mentioned a plurality of times below, and may alternatively be replaced as follows: The unit cells #B on the RIS are processed according to the rule #B.

That the rule #B indicates to process the unit cells #B on the RIS may be switching statuses of the unit cells #B according to the rule #B, so that a quantity of unit cells (for example, a quantity of valid unit cells) on the RIS before the processing is different from a quantity of processed unit cells (for example, a quantity of valid unit cells) on the RIS. The quantity of valid unit cells represents a quantity of unit cells that can reflect a signal.

Optionally, the rule #B indicates to switch statuses (or referred to as working statuses) of the unit cells #B, that is, the statuses of the unit cells #B are switched according to the rule #B. Based on this, in step 220, the RIS switches the statuses of the unit cells #B on the RIS according to the first rule.

In a possible implementation, the rule #B indicates to switch the statuses of the unit cells #B on the RIS to connected (connected) states or off (off) states (or referred to as disconnected (disconnected) states). In other words, the rule #B indicates to switch the statuses of the unit cells #B on the RIS to power-on states or power-off states. For ease of understanding and description, the following mainly uses an example in which the rule #B indicates to switch the unit cells #B on the RIS to the off states for description. That the unit cells #B are switched to the off states indicates that the unit cells #B controls diodes to be in the off states. If the unit cells #B are switched to the off states, it means that the unit cells #B do not reflect a reference signal, that is, elements in a beam vector corresponding to the unit cells #B do not take effect. Therefore, switching between a wide beam and a narrow beam can also be implemented by adjusting the statuses of the unit cells #B.

In a first possible case, the unit cells are switched to the off states at a fixed spacing. In this case, the unit cells #B include equally spaced unit cells.

For example, the unit cells on the RIS are deployed in a two-dimensional manner (as shown in FIG. 1, the unit cells on the RIS are deployed in both the horizontal direction and the vertical direction). For example, the rule #B indicates to switch a plurality of unit cells on the RIS to off states, where a spacing between every two adjacent unit cells in the plurality of unit cells in the horizontal direction is uniform, and/or a spacing between every two adjacent unit cells in the plurality of unit cells in the vertical direction is uniform.

For ease of description, Δ3 is used to represent the foregoing spacing. In an example, Δ3 is an integer greater than 0. For example, Δ3=2ⁿ, where n is an integer greater than or equal to 0. For example, Δ3 is any one of the following: 2, 4, 8, and 16.

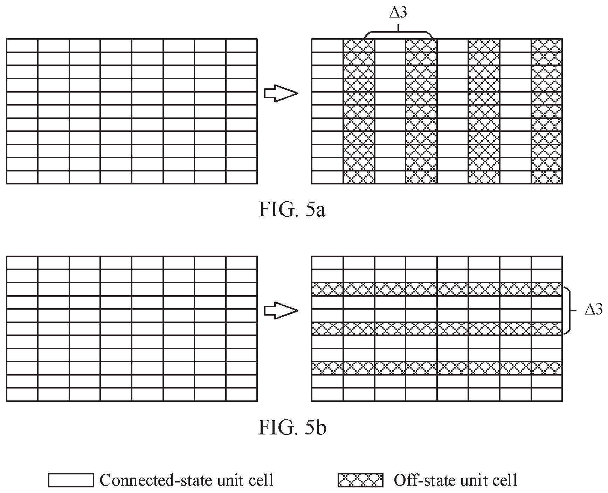

FIG. 5a and FIG. 5b are a diagram of switching unit cells to off states at a fixed spacing applicable to an embodiment of this application. As shown in FIG. 5a and FIG. 5b, unit cells on an RIS are deployed in both a horizontal direction and a vertical direction.

In an example, a spacing between every two adjacent unit cells in the unit cells #B in the vertical direction is Δ3, as shown in FIG. 5a. In this example, Δ3 may be in a one-dimensional form, to be specific, Δ3 is a spacing, in the vertical direction, between unit cells to be switched to off states.

In another example, a spacing between every two adjacent unit cells in the unit cells #B in the horizontal direction is Δ3, as shown in FIG. 5b. In this example, Δ3 may be in a one-dimensional form, to be specific, Δ3 is a spacing, in the horizontal direction, between unit cells to be switched to off states.

In another example, a spacing between every two adjacent unit cells in the unit cells #B in the vertical direction is Δ3ᵥ, and a spacing between every two adjacent unit cells in the horizontal direction is Δ3ₕ, where Δ3ₕ and Δ3ᵥ may be the same or may be different.

The foregoing provides example descriptions with reference to FIG. 5a and FIG. 5b. Embodiments of this application are not limited thereto. In addition, the first possible case in Solution 2 is similar to the first possible case in Solution 1, and a difference lies in that in Solution 1, the elements in the beam vector are zeroed, and in Solution 2, the statuses of the unit cells on the RIS are switched.

In a second possible case, a plurality of consecutive unit cells are switched to off states. In this case, the unit cells #B include the plurality of consecutive unit cells.

For example, the unit cells on the RIS are deployed in a two-dimensional manner (as shown in FIG. 1, the unit cells on the RIS are deployed in both the horizontal direction and the vertical direction). For example, the rule #B indicates to switch a plurality of unit cells on the RIS to off states, where the plurality of unit cells are consecutive in the horizontal direction, and/or the plurality of unit cells are consecutive in the vertical direction.

For ease of description, Δ4 is used to represent a quantity of consecutive unit cells that need to be switched to off states, for example, a quantity of consecutive unit cells that are to be switched to off states in the horizontal direction, and for another example, a quantity of consecutive unit cells that are to be switched to off states in the vertical direction. In an example, Δ4 is an integer greater than 1.

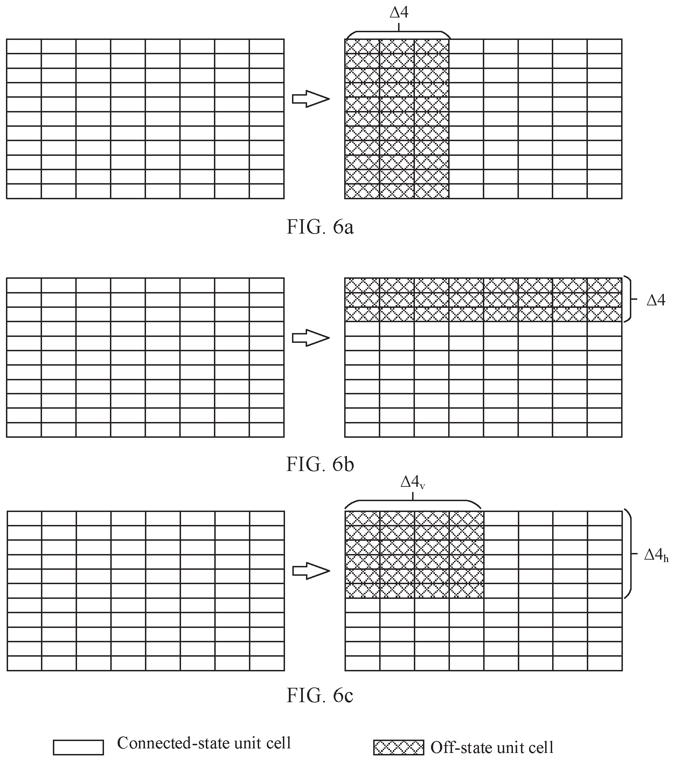

FIG. 6a to FIG. 6c are a diagram of switching a plurality of consecutive unit cells to off states applicable to an embodiment of this application. As shown in FIG. 6a to FIG. 6c, unit cells on an RIS are deployed in both a horizontal direction and a vertical direction. It is assumed that the RIS has M*N unit cells in total, N unit cells are deployed in each row in the horizontal direction, and M unit cells are deployed in each column in the vertical direction, where M and N are integers greater than 1.

In an example, the unit cells #B include M*Δ4 unit cells, the M*Δ4 unit cells are consecutive in the vertical direction, and a consecutive length is Δ4, as shown in FIG. 6a.

In another example, the unit cells #B include N*Δ4 unit cells, the N*Δ4 unit cells are consecutive in the horizontal direction, and a consecutive length is Δ4, as shown in FIG. 6b.

In another example, the unit cells #B include Δ4ₕ*Δ4ᵥ unit cells, the Δ4ₕ*Δ4ᵥ unit cells are consecutive in the horizontal direction, and a consecutive length is Δ4ₕ; and the Δ4ₕ*Δ4ᵥ unit cells are also consecutive in the vertical direction, and a consecutive length is Δ4ᵥ, where Δ4ₕ and Δ4ᵥ may be the same or may be different. As shown in FIG. 6c, the unit cells #B include 4*6 unit cells (namely, 24 unit cells), the 24 unit cells are consecutive in the horizontal direction, and a consecutive length is 4; and the 24 unit cells are also consecutive in the vertical direction, and a consecutive length is 6.

The foregoing provides example descriptions with reference to FIG. 6a to FIG. 6c. Embodiments of this application are not limited thereto. For example, a start unit cell to be switched to an off state may be further defined. For another example, the unit cells #B may include a plurality of unit cells from a specific unit cell, and a spacing between every two adjacent unit cells in the plurality of unit cells is Δ4 unit cells.

The foregoing two cases are examples for description, and this is not limited. For example, the unit cells #B may alternatively be switched to the off states at different spacings.

In addition, Solution 2 is similar to Solution 1, and a difference lies in that in Solution 1, the elements in the beam vector are zeroed, and in Solution 2, the statuses of the unit cells on the RIS are switched.

Optionally, there is an association relationship between the unit cells #B and the beam grouping policy (for differentiation, the association relationship is referred to as an association relationship #B). In this way, the unit cells #B may be learned of based on the beam grouping policy and the association relationship #B, or the beam grouping policy may be learned of based on the unit cells #B and the association relationship #B.

The association relationship #B may exist, for example, may be stored or transmitted, in a form of a table, a function, a text, or a character string. For example, examples in which the association relationship #B is presented in a form of a table are described with reference to two cases.

Case 1: The unit cells are switched to the off states at a fixed spacing.

In this case, the association relationship #B may be shown in Table 3.

**Table 3**

| BM level | Spacing between off-state unit cells |
|---|---|
| 1 | {Δ31ₕ, Δ31ᵥ} |
| 2 | {Δ32ₕ, Δ32ᵥ} |
| 3 | {Δ33ₕ, Δ33ᵥ} |

The BM level indicates that the foregoing L levels of beam measurement are performed. In the example shown in Table 3, L=3, that is, three levels of beam measurement are performed. The spacing between the off-state unit cells in Table 3 is Δ3 described above. As described above, Δ3 may be in the one-dimensional form. Specifically, Δ3 is the spacing, in the horizontal direction, between the unit cells that need to be switched to the off states, or Δ3 is the spacing, in the vertical direction, between the unit cells that need to be switched to the off states. Alternatively, Δ3 may be in a two-dimensional form. Specifically, Δ3 includes the spacing between the unit cells that need to be switched to the off states in the horizontal direction and the spacing between the unit cells that need to be switched to the off states in the vertical direction.

Table 3 is used as an example. During a first level of beam measurement, the RIS may perform processing at a spacing of {Δ31ₕ, Δ31ᵥ} between off-state unit cells. For example, during the first level of beam measurement, from a 1^{st} unit cell, the RIS may switch unit cells at a spacing of Δ31ₕ in the horizontal direction to off states, and switch unit cells at a spacing of Δ31ᵥ in the vertical direction to off states. Starting from the 1^{st} unit cell may be predefined, preconfigured, or indicated. This is not limited.

Table 3 is an example for description, and this is not limited. For example, Table 3 may further include a start position, namely, a position of the 1^{st} unit cell switched to an off state. In addition, Table 3 is similar to Table 1. A difference lies in that Table 3 shows an association relationship between the BM level and the unit cells switched to the off states, and Table 1 shows an association relationship between the BM level and the zeroed elements. Details are not described herein again.

Case 2: The plurality of consecutive unit cells are switched to the off states.

In this case, the association relationship #B may be shown in Table 4.

**Table 4**

| BM level | Interval of off-state unit cells |
|---|---|
| 1 | {IDₕ₁, IDᵥ₁}+{Δ41ₕ, Δ41ᵥ} |
| 2 | {IDₕ₂, IDᵥ₂}+{Δ42ₕ, Δ42ᵥ} |
| 3 | {IDₕ₃, IDᵥ₃}+{Δ43ₕ, Δ43ᵥ} |

The interval of the off-state unit cells in Table 4 includes: a start position, namely, IDₕ (for example, IDₕ₁, IDₕ₂, or IDₕ₃), of a unit cell switched to an off state in the horizontal direction, and a consecutive length (namely, Δ4 described above, for example, Δ4ₕ) in the horizontal direction; and a start position, namely, IDᵥ (for example, IDᵥ₁, IDᵥ₂, or IDᵥ₃), of a unit cell switched to an off state in the vertical direction, and a consecutive length (namely, Δ4, for example, Δ4ᵥ) in the vertical direction. IDᵥ or IDₕ may be used to identify (or recognize) a position of a unit cell or a position of a row or a column in which a unit cell is located. For example, in the horizontal direction, unit cells (for example, from left to right or from right to left) in each row may be sequentially numbered from a 1^{st} unit cell on the RIS, for example, IDₕ₁, IDₕ₂, and IDₕ₃; and similarly, in the vertical direction, unit cells (for example, from top to bottom or from bottom to top) in each column may be sequentially numbered from a 1^{st} unit cell on the RIS, for example, IDᵥ₁, IDᵥ₂, and IDᵥ₃.

Table 4 is used as an example. During a first level of beam measurement, the RIS may perform processing based on the interval of {IDₕ₁, IDᵥ₁}+{Δ41ₕ, Δ41ᵥ} of the off-state unit cells. For example, during the first level of beam measurement, in the horizontal direction, the RIS may switch Δ41ₕ consecutive unit cells in the horizontal direction to off states from the unit cell IDₕ₁; and in the vertical direction, the RIS may switch Δ41ᵥ consecutive unit cells in the vertical direction to off states from the unit cell IDᵥ₁.

Table 4 is an example for description, and this is not limited. For example, for Table 4, refer to Table 2. Table 4 is similar to Table 2. A difference lies in that Table 4 shows an association relationship between the BM level and the unit cells switched to the off states, and Table 2 shows an association relationship between the BM level and the zeroed elements. Details are not described herein again.

In addition, in an example, the association relationship #B may be time-constrained. Specifically, the association relationship #B may be associated with a time period, and the association relationship #B is valid within the time period. That is, within the time period, the RIS may determine the unit cells #B based on the association relationship #B and the beam grouping policy, or the RIS may determine the beam grouping policy based on the association relationship #B and the unit cells #B.

Optionally, the RIS receives second indication information, where the second indication information indicates the unit cells #B, or the second indication information indicates positions (or position information) of the unit cells #B. Specifically, the control apparatus or the communication apparatus (for example, the first communication apparatus or the second communication apparatus) sends the second indication information, and the RIS receives the second indication information, and learns, based on the second indication information, of the unit cells that need to be processed, for example, the unit cells that need to be switched to the off states. The second indication information may directly indicate the unit cells #B, or may indirectly indicate the unit cells #B. This is not limited. In an example, the second indication information may be carried in at least one of the following signaling: RRC, MAC (for example, a MAC CE), or DCI.

The following describes several possible implementations.

In a first possible implementation, the second indication information includes at least one of the following: an ending unit cell number in the unit cells #B, a starting unit cell number in the unit cells #B, a total quantity of unit cells included in the unit cells #B, or a spacing between adjacent unit cells in the unit cells #B.

For example, the unit cells on the RIS are deployed in a two-dimensional manner (as shown in FIG. 1, the unit cells on the RIS are deployed in both the horizontal direction and the vertical direction). The foregoing information may be one-dimensional or two-dimensional. Specifically, the number of the start unit cell (namely, a 1^{st} unit cell) in the unit cells #B may be a row number of the start unit cell in the horizontal direction, or may be a column number of the start unit cell in the vertical direction, or may be a number of the start unit cell (for example, the unit cells on the RIS may be numbered, that is, each unit cell on the RIS has a corresponding number). The number of the end unit cell (namely, a last unit cell) in the unit cells #B may be a row number of the end unit cell in the horizontal direction, or may be a column number of the end unit cell in the vertical direction, or may be a number of the end unit cell (for example, the unit cells on the RIS may be numbered, that is, each unit cell on the RIS has a corresponding number). The total quantity of unit cells in the unit cells #B may be a total quantity of rows of unit cells to be switched to off states in the horizontal direction (or a total quantity of unit cells to be switched to off states in each column), or may be a total quantity of columns of unit cells that need to be switched to off states in the vertical direction (or a total quantity of unit cells that need to be switched to off states in each row), or may be a total quantity of unit cells that need to be switched to off states. The spacing between the adjacent unit cells in the unit cells #B may be a spacing between unit cells to be switched to off states in the horizontal direction, or may be a spacing between unit cells to be switched to off states in the vertical direction, or may be a spacing between every two adjacent unit cells in unit cells to be switched to off states.

The following provides descriptions with reference to two cases.

Case 1: The unit cells are switched to off at a fixed spacing.

In this case, in an example, the second indication information indicates (for example, includes) a spacing between unit cells switched to off states (that is, the spacing between the adjacent unit cells in the unit cells #B) and/or a start position (that is, the number of the start unit cell in the unit cells #B). For example, as shown in FIG. 5a, the second indication information includes Δ3. In this case, unit cells at a spacing of Δ1 columns may be switched to off states from a 1^{st} column by default.

Case 2: The plurality of consecutive unit cells are switched to the off states.

In this case, in an example, the second indication information indicates (for example, includes) an interval of unit cells switched to off states (that is, the total quantity of unit cells included in the unit cells #B) and/or a start position (for example, the number of the start unit cell in the unit cells #B). For example, as shown in FIG. 6a, the second indication information includes Δ4. In this case, unit cells in Δ4 consecutive columns may be switched to off states from a 1^{st} column by default.

The foregoing provides brief descriptions with reference to the two cases. This is not limited. For example, the second indication information may include an end position at which switching to an off state is performed (for example, the number of the end unit cell in the unit cells #B), and a spacing between unit cells switched to off states or an interval of unit cells switched to off states. In this way, all unit cells that need to be switched to off states may alternatively be determined based on the end position and the interval of the unit cells or the spacing between the unit cells. For another example, the first indication information may include an end position, and it is assumed that the start position is default. In this way, all unit cells that need to be switched to off states may alternatively be determined based on the end position and the default start position.

In a second possible implementation, the second indication information includes a beam grouping policy, and the beam grouping policy has an association relationship with the unit cells #B. Specifically, the RIS may learn of the unit cells #B based on the beam grouping policy and the association relationship.

For the association relationship between the beam grouping policy and the unit cells #B, refer to the foregoing association relationship #B, as shown in Table 3 or Table 4. Details are not described herein again.

Further, the association relationship between the beam grouping policy and the unit cells #B may be predefined, preconfigured, or indicated. This is not limited. If the association relationship #B is indicated, the association relationship #B and the beam grouping policy may be carried in same signaling, or may be carried in different signaling. This is not limited.

In a third possible implementation, the second indication information includes a bitmap, and the position information of the unit cells #B is indicated by using the bitmap.

For example, the unit cells on the RIS are deployed in a two-dimensional manner (as shown in FIG. 1, the unit cells on the RIS are deployed in both the horizontal direction and the vertical direction). The bitmap may be one-dimensional (that is, the bitmap indicates a row or a column in which switching to off states is performed), or the bitmap may be two-dimensional (that is, the bitmap indicates a row and a column in which switching to off states is performed). It is assumed that the RIS has M*N unit cells in total, N unit cells are deployed in each row in the horizontal direction, and M unit cells are deployed in each column in the vertical direction, where M and N are integers greater than 1.

For example, a bitmap with M bits indicates a row in which unit cells that need to be switched to off states are located. Specifically, each bit (bit) represents one row. It is assumed that a bit value "1" indicates that switching to off states needs to be performed, and a bit value "0" indicates that the switching to the off states does not need to be performed. It is assumed that M=14. If the bitmap is 00001100001100, it indicates that unit cells in a 5^{th} row, a 6^{th} row, an 11^{th} row, and a 12^{th} row need to be switched to off states, and unit cells in remaining rows are not switched to off states.

For another example, a bitmap with N bits indicates a column in which unit cells that need to be switched to off states are located. Specifically, each bit represents one column. It is assumed that a bit value "1" indicates that zeroing needs to be performed, and a bit value "0" indicates that the switching to the off states does not need to be performed. It is assumed that N=12. If the bitmap is 100001000011, it indicates that unit cells in a 1^{st} column, a 6^{th} column, an 11^{th} column, and a 12^{th} column need to be switched to off states, and unit cells in remaining columns are not switched to off states.

For another example, a bitmap with (N+M) bits indicates a row and a column in which switching to off states needs to be performed, or two bitmaps may respectively indicate the row and the column in which the switching to the off states needs to be performed. For details, refer to the foregoing examples.

The foregoing separately describes Solution 1 and Solution 2. Solution 1 and Solution 2 may be used independently, or may be used in combination. When the foregoing two solutions are used in combination, the RIS may process the elements #A in the beam vector, and may further process the unit cells #B on the RIS.

As described above, the first rule may indicate that the elements #A in the beam vector are processed, or the first rule may indicate that the unit cells #B on the RSI are processed. Further, optionally, the method 200 further includes: The RIS receives the third indication information, where the third indication information indicates the first rule. For example, the control apparatus sends the third indication information to the RIS. For another example, the first communication apparatus or the second communication apparatus sends the third indication information to the RIS.

In a possible implementation, the third indication information is implemented by using at least one bit. For example, it is assumed that processing the elements #A in the beam vector or processing the unit cells #B on the RSI are indicated by using one bit. If the bit is set to "0", it indicates that the elements #A in the beam vector are processed, that is, in step 220, the RIS processes the elements #A in the beam vector, for example, zeroes the elements #A; or if the bit is set to "1", it indicates that the unit cells #B on the RSI are processed, that is, in step 220, the RIS processes the unit cells #B on the RSI, for example, switches the statuses of the unit cells #B to the off states. It should be understood that the foregoing descriptions are merely example descriptions, and constitute no limitation.

In another possible implementation, the third indication information is implemented by using the first indication information or the second indication information. For example, if the RIS receives the first indication information, and the first indication information indicates the elements #A, the RIS processes the elements #A in the beam vector by default. For another example, if the RIS receives the second indication information, and the first indication information indicates the unit cells #B, the RIS processes the unit cells #B of the RIS by default.

In another possible implementation, the third indication information includes a beam grouping policy, and the beam grouping policy has an association relationship with the first rule. Specifically, the RIS may learn, based on the beam grouping policy and the association relationship, whether to process the elements #A in the beam vector or process the unit cells #B on the RIS. In an example, the association relationship between the beam grouping policy and the first rule may be predefined, preconfigured, or indicated. This is not limited.

Further, the RIS may alternatively determine, based on the beam grouping policy and the association relationship, how to process the elements #A or the unit cells #B. For example, if the association relationship is in a form similar to Table 1 or Table 3, the RIS may determine, based on the association relationship, to perform zeroing at a fixed spacing or switch unit cells to off states at the fixed spacing. For another example, if the association relationship is in a form similar to Table 2 or Table 4, the RIS may determine, based on the association relationship, to perform zeroing based on consecutive intervals or switch a plurality of consecutive unit cells to off states.

For ease of understanding, the following describes a specific procedure applicable to embodiments of this application by using an example in which the first communication apparatus is a network device, the second communication apparatus is a terminal device, the reference signal is a CSI-RS, and the control apparatus is deployed in the network device. It may be understood that the following procedure is merely an example for description. Embodiments of this application are not limited thereto. For content that is not described in detail below, refer to the descriptions in the method 200. Details are not described below again.

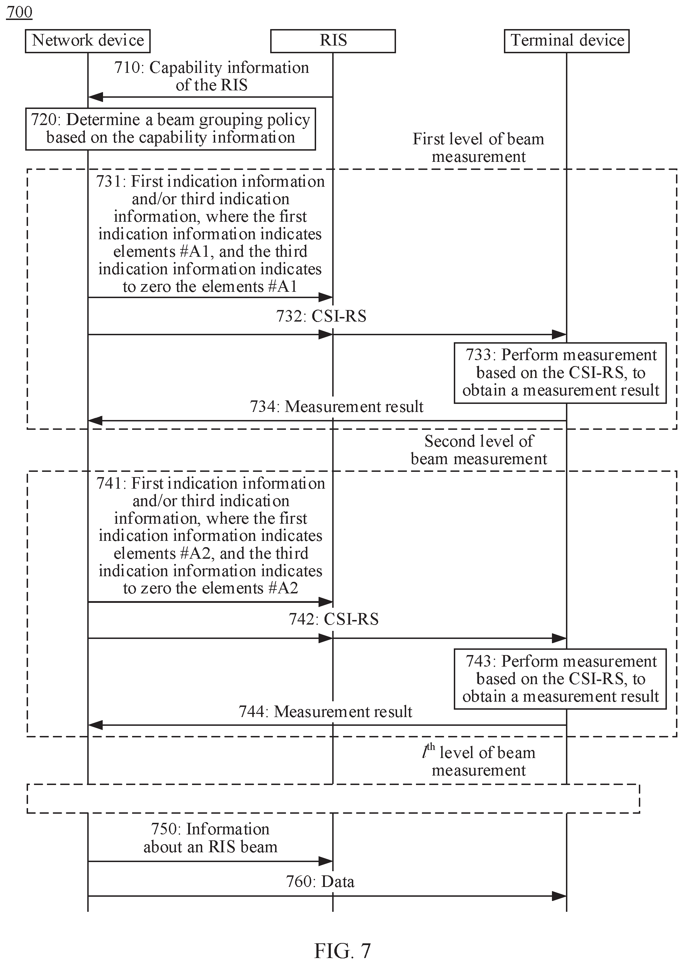

FIG. 7 is a schematic flowchart of a signal transmission method 700 applicable to an embodiment of this application. The method 700 may be used to implement Solution 1. In the method 700, it is assumed that an RIS zeroes a part of elements in a beam vector according to a first rule (namely, the foregoing rule #A). The method 700 shown in FIG. 7 may include the following steps.

710: The RIS sends capability information of the RIS to a network device.

For the capability information of the RIS, refer to the related descriptions in the method 200. Details are not described herein again.

720: The network device determines a beam grouping policy based on the capability information.

Specifically, after receiving the capability information of the RIS, the network device determines the beam grouping policy based on the capability information of the RIS. For example, the network device may determine a maximum quantity of narrow beams based on the capability information of the RIS, to determine the beam grouping policy. The beam grouping policy may include at least one of the following: performing L levels of beam measurement, a beam group or a quantity of beam groups during each level of beam measurement, or a beam or a quantity of beams in each beam group.

Optionally, the network device sends the beam grouping policy and/or an RIS codebook codeword index (namely, an index of the beam vector of the RIS) to the RIS.

For the beam grouping policy, refer to the related descriptions in the method 200. Details are not described herein again.

The network device performs a first level of beam measurement (or referred to as a first level of beam sweeping, for example, a first level of wide beam sweeping) according to the beam grouping policy. Specifically, the first level of beam measurement includes the following steps 731 to 734.

731: The network device sends first indication information and/or third indication information to the RIS, where the first indication information indicates elements #A1, and the third indication information indicates to zero the elements #A1.

The elements #A1 represent elements that need to be zeroed during the first level of beam measurement. The elements #A1 may be consecutive, or may be equally spaced. For details, refer to the related descriptions of the elements #A in the method 200. Details are not described herein again.

In an example, the network device sends the first indication information to the RIS. Based on this, the RIS may learn of the elements #A1 based on the first indication information. In this example, the RIS may process the elements #A according to the rule #A by default, that is, the RIS may zero the elements #A by default. For example, the first indication information indicates a zeroing spacing or a zeroing interval. In this case, zeroing may be performed at the zeroing spacing or based on the zeroing interval from a 1^{st} element by default. For the first indication information, refer to the related descriptions in the method 200.

In another example, the network device sends the third indication information to the RIS. Based on this, the RIS may learn, based on the third indication information, that the part of elements (namely, the elements #A1) in the beam vector of the RIS are zeroed. In this example, the elements #A1 may be predefined or preconfigured. For the third indication information, refer to the related descriptions in the method 200.

In another example, the network device sends the first indication information and the third indication information to the RIS.

732: The network device sends a CSI-RS to a terminal device via the RIS.

Specifically, the network device sends the CSI-RS. After receiving the RIS, the RIS sends the CSI-RS to the terminal device by using a beam #1, where the beam #1 is a beam used for the first level of beam measurement. In addition, before the RIS sends the CSI-RS to the terminal device by using the beam #1, the RIS zeroes the elements #A1 in the beam vector of the beam #1.

733: The terminal device performs measurement based on the CSI-RS, to obtain a measurement result.

734: The terminal device sends the measurement result to the network device.

The terminal device may directly send the measurement result to the network device, or may send the measurement result via the RIS. This is not limited.

For the measurement result, refer to the related descriptions in the method 200. Details are not described herein again.

After receiving the measurement result, the network device may perform a second level of beam measurement according to the beam grouping policy. If L=2, the second level of beam measurement may also be referred to as narrow beam measurement (or narrow beam sweeping); or if L>2, the second level of beam measurement may also be referred to as wide beam measurement (or a second level of wide beam sweeping). Specifically, the second level of beam measurement includes the following steps 741 to 744.

741: The network device sends first indication information and/or third indication information to the RIS, where the first indication information indicates elements #A2, and the third indication information indicates to zero the elements #A2.

The elements #A2 represent elements that need to be zeroed during the second level of beam measurement. The elements #A2 may be consecutive, or may be equally spaced. For details, refer to the related descriptions of the elements #A in the method 200. Details are not described herein again.

The elements #A1 and the elements #A2 may be the same or may be different. This is not limited.

742: The network device sends a CSI-RS to the terminal device via the RIS.

Specifically, the network device sends the CSI-RS. After receiving the RIS, the RIS sends the CSI-RS to the terminal device by using a beam #2, where the beam #2 is a beam used for the second level of beam measurement. In addition, before the RIS sends the CSI-RS to the terminal device by using the beam #2, the RIS zeroes the elements #A2 in the beam vector of the beam #2.

743: The terminal device performs measurement based on the CSI-RS, to obtain a measurement result.

744: The terminal device sends the measurement result to the network device.

Steps 741 to 744 are similar to steps 731 to 734, and details are not described herein again.

Similarly, the network device performs an *l*^{th} (*l*≤L) level of beam measurement according to the beam grouping policy. The *l*^{th} level of beam measurement is similar to the foregoing first level of beam measurement, and details are not described herein again.

750: The network device indicates information about an RIS beam to the RIS.

The RIS beam is a beam that is determined based on the measurement result and that is used for data transmission. Specifically, the network device determines, based on feedback for L levels of measurement, a beam (for example, an optimal beam or a better beam) with better beam quality that is on the RIS and that is for data transmission. Therefore, the network device indicates the information about the RIS beam to the RIS. For example, the RIS beam is a beam whose quality is greater than or equal to a preset threshold and that is determined based on the measurement result.

760: The network device sends data to the terminal device.

The network device may directly send the data to the terminal device; or the network device may send the data to the terminal device via the RIS. Specifically, the network device sends the data, and the RIS receives the data, and sends (or reflects) the data to the terminal device by using the RIS beam in step 750.

Based on the foregoing solution, the elements in the beam vector are adjusted, for example, the part of elements in the beam vector are zeroed, so that switching between a wide beam and a narrow beam can be implemented, thereby improving beam training efficiency. In addition, the beam measurement is performed according to the beam grouping policy, for example, at L levels, so that overheads during each time of beam measurement can be reduced.

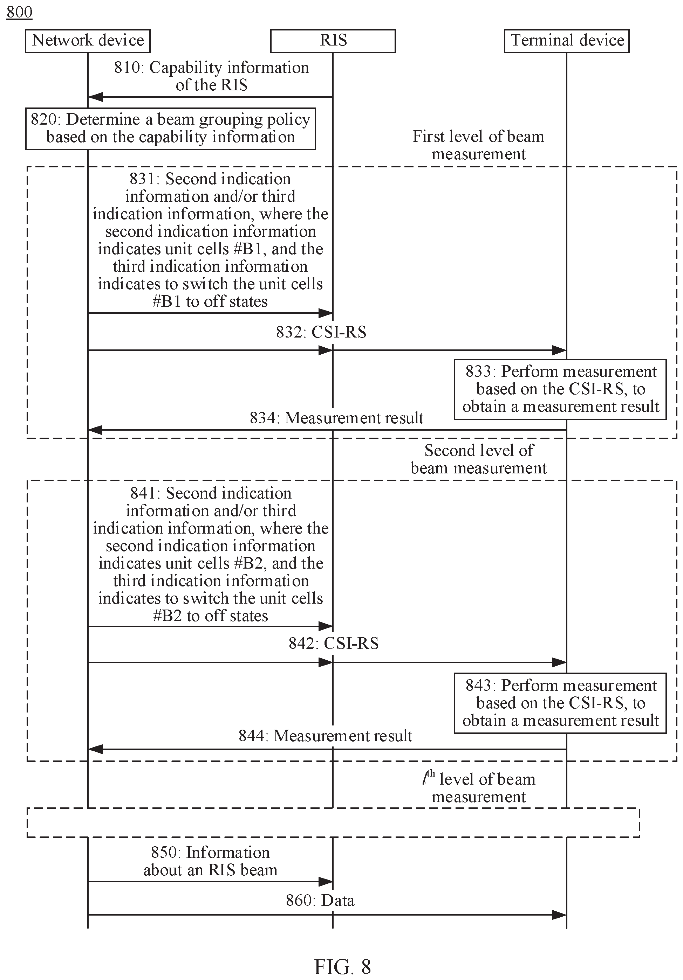

FIG. 8 is a schematic flowchart of a signal transmission method 800 applicable to an embodiment of this application. The method 800 may be used to implement Solution 2. In the method 800, it is assumed that the RIS switches a part of unit cells on the RIS to off states according to a first rule (namely, the foregoing rule #B). The method 800 shown in FIG. 8 may include the following steps.

810: The RIS sends capability information of the RIS to a network device.

820: The network device determines a beam grouping policy based on the capability information.

Optionally, the network device sends the beam grouping policy to the RIS. Further, in an example, the network device further sends an RIS codebook codeword index (namely, an index of a beam vector of the RIS) to the RIS.

The network device performs a first level of beam measurement (or referred to as a first level of beam sweeping, for example, a first level of wide beam sweeping) according to the beam grouping policy. Specifically, the first level of beam measurement includes the following steps 831 to 834.

831: The network device sends second indication information and/or third indication information to the RIS, where the second indication information indicates unit cells #B1, and the third indication information switches the unit cells #B1 to off states.

The unit cells #B1 represent unit cells that need to be switched to off states during the first level of beam measurement. The unit cells #B1 may be consecutive, or may be equally spaced. For details, refer to the related descriptions of the unit cells #B in the method 200. Details are not described herein again.

In an example, the network device sends the second indication information to the RIS. Based on this, the RIS may learn of the unit cells #B1 based on the second indication information. In this example, the RIS may process the unit cells #B according to the rule #B by default, that is, the RIS may switch the unit cells #B1 to the off states by default. For example, the second indication information #1 indicates a spacing between unit cells switched to off states or an interval of unit cells switched to off states. In this case, by default, the unit cells in the range may be switched to the off states from a 1^{st} unit cell at the spacing between the nit cells switched to the off states or the interval of the unit cells switched to the off states. For the second indication information, refer to the related descriptions in the method 200.

In another example, the network device sends the third indication information to the RIS. Based on this, the RIS may learn, based on the third indication information, that the part of unit cells (namely, the unit cells #B1) on the RIS are switched to the off states. In this example, the unit cells #B1 may be predefined or preconfigured. For the third indication information, refer to the related descriptions in the method 200.

In another example, the network device sends the second indication information and the third indication information to the RIS.

832: The network device sends a CSI-RS to a terminal device via the RIS.

Specifically, the network device sends the CSI-RS. After receiving the RIS, the RIS sends the CSI-RS to the terminal device by using unit cells #1 on the RIS, where the unit cells #1 on the RIS are unit cells used for the first level of beam measurement. In addition, before the RIS sends the CSI-RS to the terminal device by using the unit cells #1 on the RIS, the RIS switches the unit cells #B1 in the unit cells #1 on the RIS to the off states.

833: The terminal device performs measurement based on the CSI-RS, to obtain a measurement result.

834: The terminal device sends the measurement result to the network device.

After receiving the measurement result, the network device may perform a second level of beam measurement according to the beam grouping policy. If L=2, the second level of beam measurement may also be referred to as narrow beam measurement (or narrow beam sweeping); or if L>2, the second level of beam measurement may also be referred to as wide beam measurement (or a second level of wide beam sweeping). Specifically, the second level of beam measurement includes the following steps 841 to 844.

841: The network device sends second indication information and/or third indication information to the RIS, where the second indication information indicates unit cells #B2, and the third indication information indicates to switch the unit cells #B2 to off states.

The unit cells #B2 represent unit cells that need to be switched to off states during the second level of beam measurement. The unit cells #B2 may be consecutive, or may be equally spaced. For details, refer to the related descriptions of the unit cells #B in the method 200. Details are not described herein again.

The unit cells #B1 and the unit cells #B2 may be the same or may be different. This is not limited.

842: The network device sends a CSI-RS to the terminal device via the RIS.

Specifically, the network device sends the CSI-RS. After receiving the RIS, the RIS sends the CSI-RS to the terminal device by using unit cells #2 on the RIS, where the unit cells #2 on the RIS are unit cells used for the second level of beam measurement. In addition, before the RIS sends the CSI-RS to the terminal device by using the unit cells #2 on the RIS, the RIS switches the unit cells #B2 in the unit cells #2 on the RIS to the off states.

843: The terminal device performs measurement based on the CSI-RS, to obtain a measurement result.

844: The terminal device sends the measurement result to the network device.

Steps 841 to 844 are similar to steps 831 to 834, and details are not described herein again.

Similarly, the network device performs an *l*^{th} (*l*≤L) level of beam measurement according to the beam grouping policy. The *l*^{th} level of beam measurement is similar to the foregoing first level of beam measurement, and details are not described herein again.

850: The network device indicates information about an RIS beam to the RIS.

860: The network device sends data to the terminal device.

The network device may directly send the data to the terminal device; or the network device may send the data to the terminal device via the RIS. Specifically, the network device sends the data, and the RIS receives the data, and sends (or reflects) the data to the terminal device by using the RIS beam in step 850.

The method 800 is similar to the method 700. A difference lies in that in the method 700, the elements in the beam vector are zeroed, and in the method 800, the unit cells on the RIS are switched to the off states.

Based on the foregoing solution, the statuses of the unit cells on the RIS are adjusted, for example, the part of unit cells on the RIS are switched to the off states, so that switching between a wide beam and a narrow beam can be implemented, thereby improving beam training efficiency. In addition, the beam measurement is performed according to the beam grouping policy, for example, at L levels, so that overheads during each time of beam measurement can be reduced.

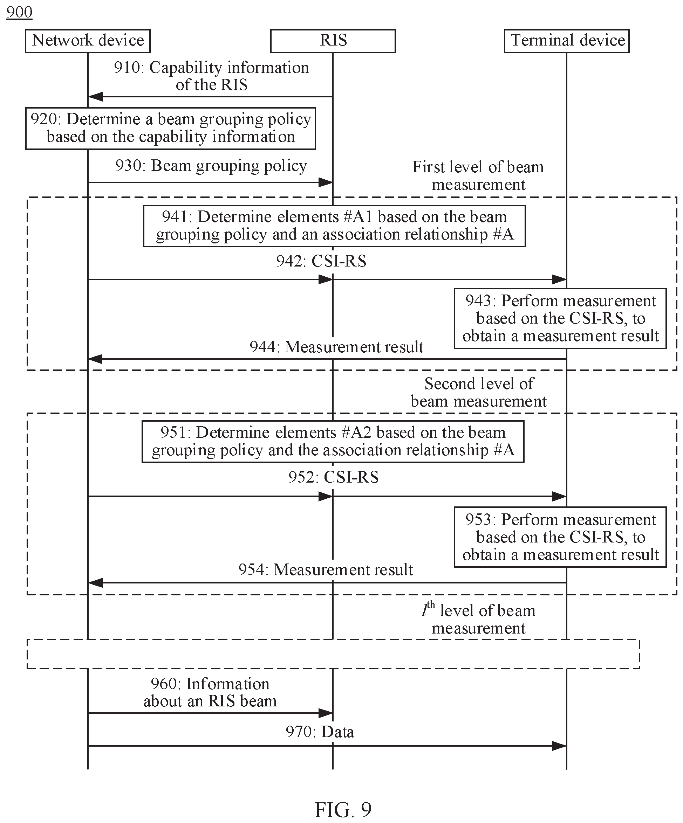

FIG. 9 is a schematic flowchart of a signal transmission method 900 applicable to an embodiment of this application. The method 900 may be used to implement Solution 1. In the method 900, it is assumed that an RIS zeroes a part of elements in a beam vector according to a first rule (namely, the foregoing rule #A). The method 900 shown in FIG. 9 may include the following steps.

910: The RIS sends capability information to a network device.

920: The network device determines a beam grouping policy based on the capability information.

930: The network device sends the beam grouping policy to the RIS.

In an example, the beam grouping policy includes at least one of the following: performing L levels of beam measurement, a beam group or a quantity of beam groups during each level of beam measurement, or a beam or a quantity of beams in each beam group. L is an integer greater than or equal to 1. In step 931, the network device may send the at least one of the foregoing information to the RIS.

In an example, a quantity of beam groups is uniform during each level of beam measurement, and a quantity of beams in each beam group is uniform. In this case, in step 931, the network device may send, to the RIS, at least one of the following parameters: L, G, or K. G represents a quantity of beam groups during each level of beam measurement, and K represents a quantity of beams in one beam group. L, G, and K are all positive integers.

In another example, a quantity of beam groups during each level of beam measurement is uniform, and a quantity of beams in each beam group varies. In this case, in step 931, the network device may send, to the RIS, at least one of the following parameters: L, G, or Ki. Ki represents a quantity of beams in one beam group during an i^{th} level of beam measurement. i=1, 2, ..., L, and Ki is a positive integer.

In another example, a quantity of beam groups during each level of beam measurement varies, and a quantity of beams in each beam group is uniform. In this case, in step 931, the network device may send, to the RIS, at least one of the following parameters: L, Gi, or K. Gi represents a quantity of beam groups during an i^{th} level of beam measurement. Gi is a positive integer.

In another example, a quantity of beam groups during each level of beam measurement varies, and a quantity of beams in each beam group varies. In this case, in step 931, the network device may send, to the RIS, at least one of the following parameters: L, Gi, or Ki.

Further, in an example, the network device further sends an RIS codebook codeword index (namely, an index of a beam vector of the RIS) to the RIS.

The network device performs a first level of beam measurement (or referred to as a first level of beam sweeping, for example, a first level of wide beam sweeping) according to the beam grouping policy. Specifically, the first level of beam measurement includes the following steps 941 to 944.

941: The RIS determines elements #A1 based on the beam grouping policy and an association relationship #A.

The elements #A1 represent elements that need to be zeroed during the first level of beam measurement. The elements #A1 may be consecutive, or may be equally spaced. For details, refer to the related descriptions of the elements #A in the method 200. Details are not described herein again.

The association relationship #A represents a relationship between the elements #A (namely, elements that need to be zeroed) and the beam grouping policy.

Table 1 is used as an example. During a first level of beam measurement, zeroing may be performed at a zeroing spacing of Δ11. For example, during the first level of beam measurement, the RIS may zero elements at a spacing of Δ11 rows from a 1^{st} row of the beam vector. For another example, during the first level of beam measurement, the RIS may zero elements at a spacing of Δ11 columns from a 1^{st} column of the beam vector. Starting from the 1^{st} row or the 1^{st} column may be predefined, preconfigured, or indicated. This is not limited.

For the mapping relationship #A, refer to the related descriptions in the method 200. Details are not described herein again.

942: The network device sends a CSI-RS to a terminal device via the RIS.

Specifically, the network device sends the CSI-RS. After receiving the RIS, the RIS sends the CSI-RS to the terminal device by using a beam #1, where the beam #1 is a beam used for the first level of beam measurement. In addition, before the RIS sends the CSI-RS to the terminal device by using the beam #1, the RIS zeroes the elements #A1 in the beam vector of the beam #1.

943: The terminal device performs measurement based on the CSI-RS, to obtain a measurement result.

944: The terminal device sends the measurement result to the network device.

After receiving the measurement result, the network device may perform a second level of beam measurement according to the beam grouping policy. If L=2, the second level of beam measurement may also be referred to as narrow beam measurement (or narrow beam sweeping); or if L>2, the second level of beam measurement may also be referred to as wide beam measurement (or a second level of wide beam sweeping). Specifically, the second level of beam measurement includes the following steps 951 to 954.

951: The RIS determines elements #A2 based on the beam grouping policy and the association relationship #A.

The elements #A2 represent elements that need to be zeroed during the second level of beam measurement. The elements #A2 may be consecutive, or may be equally spaced. For details, refer to the related descriptions of the elements #A in the method 200. Details are not described herein again.

The elements #A1 and the elements #A2 may be the same or may be different. This is not limited.

952: The network device sends a CSI-RS to the terminal device via the RIS.

Specifically, the network device sends the CSI-RS. After receiving the RIS, the RIS sends the CSI-RS to the terminal device by using a beam #2, where the beam #2 is a beam used for the second level of beam measurement. In addition, before the RIS sends the CSI-RS to the terminal device by using the beam #2, the RIS zeroes the elements #A2 in the beam vector of the beam #2.

953: The terminal device performs measurement based on the CSI-RS, to obtain a measurement result.

954: The terminal device sends the measurement result to the network device.

Steps 951 to 954 are similar to steps 941 to 944, and details are not described herein again.

Similarly, the network device performs an *l*^{th} (*l*≤L) level of beam measurement according to the beam grouping policy. The *l*^{th} level of beam measurement is similar to the foregoing first level of beam measurement, and details are not described herein again.

960: The network device indicates information about an RIS beam to the RIS.

970: The network device sends data to the terminal device.

It may be understood that the foregoing is an example for description. For example, step 941 may be performed after step 942, or may be performed before step 942, or may be performed simultaneously with step 942. This is not limited. For another example, step 951 may be performed after step 952, or may be performed before step 952, or may be performed simultaneously with step 952. This is not limited. For another example, step 941 and step 951 may alternatively be performed simultaneously. For another example, step 942 and step 930 may be performed simultaneously.

Based on the foregoing solution, the elements in the beam vector are adjusted, for example, the part of elements in the beam vector are zeroed, so that switching between a wide beam and a narrow beam can be implemented, thereby improving beam training efficiency. In addition, the beam measurement is performed according to the beam grouping policy, for example, at L levels, so that overheads during each time of beam measurement can be reduced. In addition, the beam grouping policy has an association relationship with elements that need to be zeroed. In this way, elements that need to be zeroed during each time of beam measurement can be directly determined based on the association relationship, thereby reducing indication overheads.

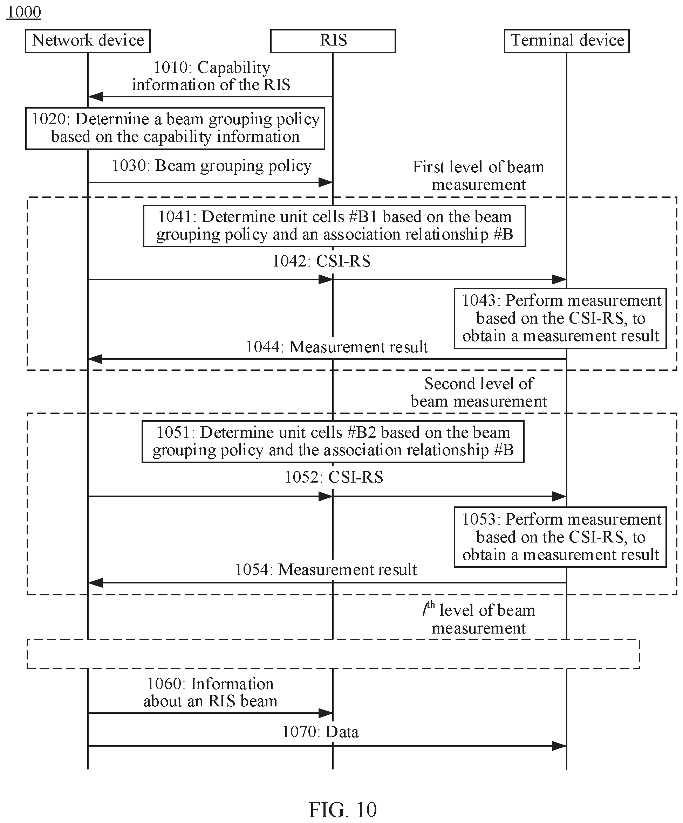

FIG. 10 is a schematic flowchart of a signal transmission method 1000 applicable to an embodiment of this application. The method 1000 may be used to implement Solution 2. In the method 1000, it is assumed that the RIS switches a part of unit cells on the RIS to off states according to a first rule (namely, the foregoing rule #B). The method 1000 shown in FIG. 10 may include the following steps.

1010: The RIS sends capability information to a network device.

1020: The network device determines a beam grouping policy based on the capability information.

1030: The network device sends the beam grouping policy to the RIS.

Further, in an example, the network device further sends an RIS codebook codeword index (namely, an index of a beam vector of the RIS) to the RIS.

The network device performs a first level of beam measurement (or referred to as a first level of beam sweeping, for example, a first level of wide beam sweeping) according to the beam grouping policy. Specifically, the first level of beam measurement includes the following steps 1041 to 1044.

1041: The RIS determines unit cells #B1 based on the beam grouping policy and an association relationship #A.

The unit cells #B1 represent unit cells that need to be switched to off states during the first level of beam measurement. The unit cells #B1 may be consecutive, or may be equally spaced. For details, refer to the related descriptions of the unit cells #B in the method 200. Details are not described herein again.

An association relationship #B represents a relationship between the unit cells #B (namely, unit cells switched to off states) and the beam grouping policy.

Table 3 is used as an example. During a first level of beam measurement, the RIS may perform processing at a spacing of {Δ31ₕ, Δ31ᵥ} between off-state unit cells. For example, during the first level of beam measurement, from a 1^{st} unit cell, the RIS may switch unit cells at a spacing of Δ31ₕ in the horizontal direction to off states, and switch unit cells at a spacing of Δ31ᵥ in the vertical direction to off states. Starting from the 1^{st} unit cell may be predefined, preconfigured, or indicated. This is not limited.

For the mapping relationship #B, refer to the related descriptions in the method 200. Details are not described herein again.

1042: The network device sends a CSI-RS to a terminal device via the RIS.

Specifically, the network device sends the CSI-RS. After receiving the RIS, the RIS sends the CSI-RS to the terminal device by using unit cells #1 on the RIS, where the unit cells #1 on the RIS are elements used for the first level of beam measurement. In addition, before the RIS sends the CSI-RS to the terminal device by using the unit cells #1 on the RIS, the RIS switches the unit cells #B1 in the unit cells #1 on the RIS to the off states.

1043: The terminal device performs measurement based on the CSI-RS, to obtain a measurement result.

1044: The terminal device sends the measurement result to the network device.

After receiving the measurement result, the network device may perform a second level of beam measurement according to the beam grouping policy. If L=2, the second level of beam measurement may also be referred to as narrow beam measurement (or narrow beam sweeping); or if L>2, the second level of beam measurement may also be referred to as wide beam measurement (or a second level of wide beam sweeping). Specifically, the second level of beam measurement includes the following steps 1051 to 1054.

1051: The RIS determines unit cells #B2 based on the beam grouping policy and the association relationship #A.

The unit cells #B2 represent unit cells that need to be switched to off states during the second level of beam measurement. The unit cells #B2 may be consecutive, or may be equally spaced. For details, refer to the related descriptions of the unit cells #B in the method 200. Details are not described herein again.

The unit cells #B1 and the unit cells #B2 may be the same or may be different. This is not limited.

1052: The network device sends a CSI-RS to the terminal device via the RIS.

Specifically, the network device sends the CSI-RS. After receiving the RIS, the RIS sends the CSI-RS to the terminal device by using unit cells #2 on the RIS, where the unit cells #2 on the RIS are unit cells used for the second level of beam measurement. In addition, before the RIS sends the CSI-RS to the terminal device by using the unit cells #2 on the RIS, the RIS switches the unit cells #B2 in the unit cells #2 on the RIS to the off states.

1053: The terminal device performs measurement based on the CSI-RS, to obtain a measurement result.

1054: The terminal device sends the measurement result to the network device via the RIS.

Similarly, the network device performs an *l*^{th} (*l*≤L) level of beam measurement according to the beam grouping policy. The *l*^{th} level of beam measurement is similar to the foregoing first level of beam measurement, and details are not described herein again.

1060: The network device indicates information about an RIS beam to the RIS.

1070: The network device sends data to the terminal device.

The method 1000 is similar to the method 900. A difference lies in that in the method 900, the elements in the beam vector are zeroed, and in the method 1000, the unit cells on the RIS are switched to the off states.

Based on the foregoing solution, the statuses of the unit cells on the RIS are adjusted, for example, the part of unit cells on the RIS are switched to the off states, so that switching between a wide beam and a narrow beam can be implemented, thereby improving beam training efficiency. In addition, the beam measurement is performed according to the beam grouping policy, for example, at L levels, so that overheads during each time of beam measurement can be reduced. In addition, the beam grouping policy has an association relationship with unit cells that need to switch the statuses. In this way, unit cells that need to switch statuses during each time of beam measurement can be directly determined based on the association relationship, thereby reducing indication overheads.

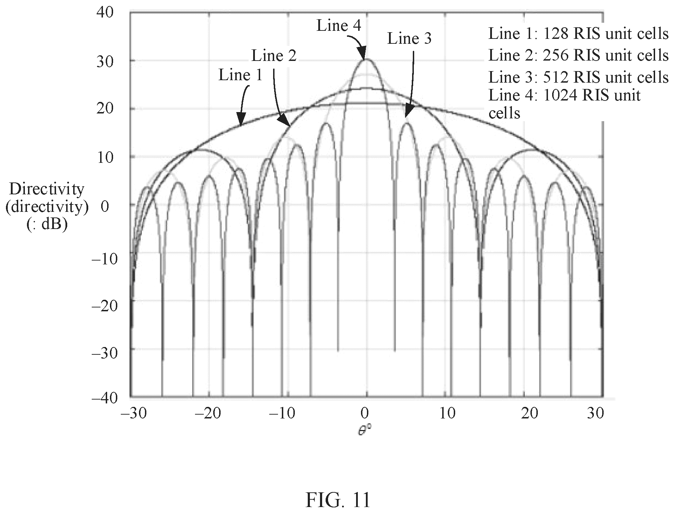

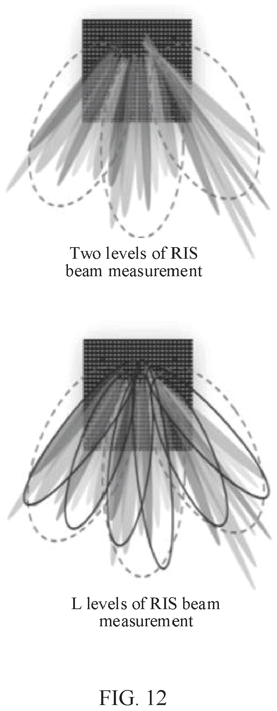

The foregoing describes in detail the solutions in embodiments of this application. The following describes effects of the foregoing solutions with reference to FIG. 11 and FIG. 12.

FIG. 11 is a diagram of a relationship between a quantity of unit cells on an RIS and beams. As shown in FIG. 11, a horizontal coordinate represents an antenna angle; and a vertical coordinate represents directivity (directivity) of an antenna. The directivity may represent, for example, a peak-to-average ratio of radiated power in specific spatial distribution, and a unit of the directivity is dB. A waveform width varies with the quantity of unit cells on the RIS. It can be learned that flexible switching between a wide beam and a narrow beam can be implemented by controlling statuses of RIS unit cells.

FIG. 12 is a diagram of a beam grouping policy according to an embodiment of this application. As shown in FIG. 12, during two levels of beam measurement, that is, RIS beams are performed in two rounds, wide beam measurement (that is, beams shown by dashed lines in FIG. 12) may be performed first, and then narrow beam measurement is performed. A manner of switching from a wide beam to a narrow beam may be zeroing elements #A in a beam vector corresponding to an RIS, or may be switching unit cells #B on the RIS to off states. A beam grouping policy is designed, for example, L levels of beam measurement are performed, so that beam training overheads are reduced as a total quantity of beams increases. In this way, not only the training overheads can be reduced, but also a system capacity can be improved.

It may be understood that, in some of the foregoing embodiments, an example in which the part of unit cells on the RIS are switched to the off states is used for description. Embodiments of this application are not limited thereto. For example, any solution for switching or adjusting statuses of unit cells on an RIS is applicable to embodiments of this application. For another example, a solution in which a quantity of valid unit cells on an RIS (that is, a quantity of unit cells that can reflect a signal) varies also falls within the scope of embodiments of this application.

It may be further understood that, in some of the foregoing embodiments, an example in which the part of elements in the beam vector are zeroed is used for description. Embodiments of this application are not limited thereto. For example, any solution for adjusting elements in a beam vector is applicable to embodiments of this application.

It may be further understood that, in the foregoing method embodiments, the method and the operation implemented by the device may alternatively be implemented by a component (such as a chip or a circuit) of the device. This is not limited.

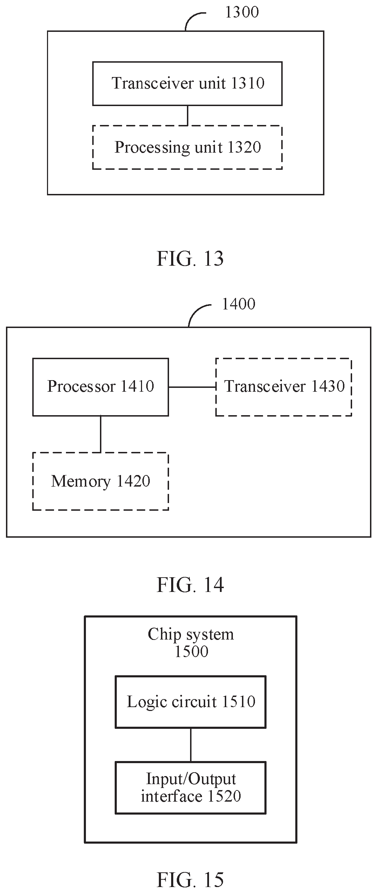

The foregoing describes, in detail with reference to FIG. 2 to FIG. 12, the methods provided in embodiments of this application. The following describes, in detail with reference to FIG. 13 to FIG. 15, apparatuses provided in embodiments of this application. It should be understood that descriptions of apparatus embodiments correspond to the descriptions of the method embodiments. Therefore, for content that is not described in detail, refer to the foregoing method embodiments. For brevity, details are not described herein.

FIG. 13 is a diagram of a communication apparatus 1300 according to an embodiment of this application. The apparatus 1300 includes a transceiver unit 1310. The transceiver unit 1310 may be configured to implement a corresponding communication function. The transceiver unit 1310 may also be referred to as a communication interface or a communication unit. Optionally, the apparatus 1300 further includes a processing unit 1320. The processing unit 1320 may be configured to: perform processing, for example, determine a beam vector, perform zeroing, and switch statuses of unit cells.

Optionally, the apparatus 1300 may further include a storage unit. The storage unit may be configured to store instructions and/or data. The processing unit 1320 may read the instructions and/or the data in the storage unit, to cause the apparatus to implement the foregoing method embodiments.

Optionally, the transceiver unit 1310 may include a receiving unit and a sending unit. The receiving unit may be configured to perform a receiving-related operation (for example, an operation of receiving data or a message), and the sending unit may be configured to perform a sending-related operation (for example, an operation of sending data or a message).

In a first possible design, the apparatus 1300 may be the RIS in the foregoing embodiments, and the apparatus 1300 may implement steps or procedures performed by the RIS in the foregoing method embodiments. The transceiver unit 1310 may be configured to perform a receiving/sending-related operation (for example, an operation of sending and/or receiving data or a message) of the RIS in the foregoing method embodiments. For example, the transceiver unit 1310 may be configured to perform steps 210 and 230 in the embodiment shown in FIG. 2. For another example, the transceiver unit 1310 may be configured to perform a receiving/sending-related operation of the RIS in the embodiments shown in FIG. 7 to FIG. 10. The processing unit 1320 may be configured to perform a processing-related operation of the RIS in the foregoing method embodiments, or an operation other than receiving/sending (for example, an operation other than sending and/or receiving data or a message). For example, the processing unit 1320 may be configured to perform step 220 and step 220 in the embodiment shown in FIG. 2. For another example, the processing unit 1320 may be configured to perform a processing-related operation of the RIS in the embodiments shown in FIG. 7 to FIG. 10.

In a second possible design, the apparatus 1300 may be the first communication apparatus in the foregoing embodiments, and the apparatus 1300 may implement steps or procedures performed by the first communication apparatus in the foregoing method embodiments. The transceiver unit 1310 may be configured to perform a receiving/sending-related operation (for example, an operation of sending and/or receiving data or a message) of the first communication apparatus in the foregoing method embodiments. For example, the transceiver unit 1310 may be configured to perform steps 210 and 240 in the embodiment shown in FIG. 2. For another example, the transceiver unit 1310 may be configured to perform a receiving/sending-related operation of the network device in the embodiments shown in FIG. 7 to FIG. 10. The processing unit 1320 may be configured to perform a processing-related operation of the first communication apparatus in the foregoing method embodiments, or an operation other than receiving/sending (for example, an operation other than sending and/or receiving data or a message). For example, the processing unit 1320 may be configured to perform a processing-related operation of the first communication apparatus in the embodiment shown in FIG. 2. For another example, the processing unit 1320 may be configured to perform a processing-related operation of the network device in the embodiments shown in FIG. 7 to FIG. 10.

In a third possible design, the apparatus 1300 may be the second communication apparatus in the foregoing embodiments, and the apparatus 1300 may implement steps or procedures performed by the second communication apparatus in the foregoing method embodiments. The transceiver unit 1310 may be configured to perform a receiving/sending-related operation (for example, an operation of sending and/or receiving data or a message) of the second communication apparatus in the foregoing method embodiments. For example, the transceiver unit 1310 may be configured to perform steps 230 and 240 in the embodiment shown in FIG. 2. For another example, the transceiver unit 1310 may be configured to perform a receiving/sending-related operation of the terminal device in the embodiments shown in FIG. 7 to FIG. 10. The processing unit 1320 may be configured to perform a processing-related operation of the second communication apparatus in the foregoing method embodiments, or an operation other than receiving/sending (for example, an operation other than sending and/or receiving data or a message). For example, the processing unit 1320 may be configured to perform a processing-related operation of the second communication apparatus in the embodiment shown in FIG. 2. For another example, the processing unit 1320 may be configured to perform a processing-related operation of the terminal device in the embodiments shown in FIG. 7 to FIG. 10.

It should be understood that a specific process in which the units perform the foregoing corresponding steps is described in detail in the foregoing method embodiments, and for brevity, details are not described herein.

It should be further understood that the apparatus 1300 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1300 may be specifically the communication apparatus in the foregoing embodiments, and may be configured to perform procedures and/or steps corresponding to the communication apparatus in the foregoing method embodiments. To avoid repetition, details are not described herein again.

The apparatus 1300 in the foregoing solutions has a function of implementing corresponding steps performed by the communication apparatus in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to respectively perform a receiving/sending operation and a processing-related operation in the foregoing method embodiments.

In addition, the transceiver unit 1310 may alternatively be a transceiver circuit (for example, may include a receiver circuit and a transmitter circuit), and the processing unit may be a processing circuit.

It should be noted that the apparatus in FIG. 13 may be the communication device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 14 is a diagram of another communication apparatus 1400 according to an embodiment of this application. The apparatus 1400 includes a processor 1410. The processor 1410 is coupled to a memory 1420. The memory 1420 is configured to store a computer program or instructions and/or data. The processor 1410 is configured to: execute the computer program or the instructions stored in the memory 1420, or read the data stored in the memory 1420, to perform the methods in the foregoing method embodiments.

Optionally, there are one or more processors 1410.

Optionally, there are one or more memories 1420.

Optionally, the memory 1420 and the processor 1410 are integrated together, or are disposed separately.

Optionally, as shown in FIG. 14, the apparatus 1400 further includes a transceiver 1430. The transceiver 1430 is configured to: receive and/or send a signal. For example, the processor 1410 is configured to control the transceiver 1430 to receive and/or send the signal.

In an example, the processor 1410 may have a function of the processing unit 1320 shown in FIG. 13, the memory 1420 may have a function of the storage unit, and the transceiver 1430 may have a function of the transceiver unit 1310 shown in FIG. 13.

In a solution, the apparatus 1400 is configured to implement an operation performed by the communication apparatus in the foregoing method embodiments.

For example, the processor 1410 is configured to execute the computer program or the instructions stored in the memory 1420, to implement a related operation of the RIS in the foregoing method embodiments.

For another example, the processor 1410 is configured to execute the computer program or the instructions stored in the memory 1420, to implement a related operation of the first communication apparatus or the second communication apparatus in the foregoing method embodiments.

It should be understood that, the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

FIG. 15 is a diagram of a chip system 1500 according to an embodiment of this application. The chip system 1500 (or may be referred to as a processing system) includes a logic circuit 1510 and an input/output interface (input/output interface) 1520.

The logic circuit 1510 may be a processing circuit in the chip system 1500. The logic circuit 1510 may be coupled and connected to a storage unit, and invoke instructions in the storage unit, so that the chip system 1500 can implement the methods and functions in embodiments of this application. The input/output interface 1520 may be an input/output circuit in the chip system 1500, and outputs information processed by the chip system 1500, or inputs to-be-processed data or signaling information to the chip system 1500 for processing.

Optionally, the logic circuit 1510 may be implemented by one or more processors, including the one or more processors or a processing part of the one or more processors.

Optionally, the input/output interface 1520 may include a transceiver circuit, a transceiver, an input/output circuit, or a communication interface.

In a solution, the chip system 1500 is configured to implement an operation performed by the communication apparatus (for example, the RIS, the first communication apparatus, or the second communication apparatus) in the foregoing method embodiments.

For example, the logic circuit 1510 is configured to implement a processing-related operation performed by the communication apparatus (for example, the RIS, the first communication apparatus, or the second communication apparatus) in the foregoing method embodiments. The input/output interface 1520 is configured to implement a sending and/or receiving-related operation performed by the communication apparatus (for example, the RIS, the first communication apparatus, or the second communication apparatus) in the foregoing method embodiments.

An embodiment of this application further provides a computer-readable storage medium. The computer-readable storage medium stores computer instructions used to implement the method performed by the communication apparatus (for example, the RIS, the first communication apparatus, or the second communication apparatus) in the foregoing method embodiments.

For example, when the computer program is executed by a computer, the computer is caused to implement the method performed by the communication apparatus (for example, the RIS, the first communication apparatus, or the second communication apparatus) in the foregoing method embodiments.

An embodiment of this application further provides a computer program product, including instructions. When the instructions are executed by a computer, the method performed by the communication apparatus (for example, the RIS, the first communication apparatus, or the second communication apparatus) in the foregoing method embodiments is implemented.

An embodiment of this application further provides a communication system. The communication system includes at least one of the RIS, the first communication apparatus, and the second communication apparatus in the foregoing embodiments. For example, the system includes at least one of the RIS, the first communication apparatus, and the second communication apparatus in FIG. 2. For another example, the system includes at least one of the RIS, the network device, and the terminal device in FIG. 7 to FIG. 10.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, applied to a configurable intelligent surface RIS side, and comprising:
receiving a reference signal from a first communication apparatus; and
sending the reference signal to a second communication apparatus based on first processing, wherein the first processing is processing a first part of elements in a beam vector according to a first rule, or the first processing is processing a first part of unit cells on an RIS according to the first rule.

2. The method according to claim 1, wherein that the first processing is processing the first part of elements in the beam vector according to the first rule comprises: the first processing is zeroing the first part of elements in the beam vector according to the first rule.

3. The method according to claim 1 or 2, wherein the first part of elements are consecutive elements, or the first part of elements are equally spaced elements.

4. The method according to any one of claims 1 to 3, wherein the method further comprises:
receiving first indication information, wherein the first indication information indicates the first part of elements.

5. The method according to claim 4, wherein
the first indication information comprises at least one of the following: a starting element number in the first part of elements, a total quantity of elements in the first part of elements, or a spacing between adjacent elements in the first part of elements; or
the first indication information comprises a beam grouping policy, wherein the beam grouping policy has an association relationship with the first part of elements, and the beam grouping policy is a grouping policy for beams on the RIS; or
the first indication information comprises a bitmap bitmap, and the bitmap indicates position information of the first part of elements.

6. The method according to claim 1, wherein that the first processing is processing the first part of unit cells on the RIS according to the first rule comprises: the first processing is switching statuses of the first part of unit cells on the RIS to connected states or off states according to the first rule.

7. The method according to claim 1 or 6, wherein the first part of unit cells are consecutive unit cells, or the first part of unit cells are equally spaced unit cells.

8. The method according to claim 1, 6, or 7, wherein the method further comprises:
receiving second indication information, wherein the second indication information indicates the first part of unit cells.

9. The method according to claim 8, wherein
the second indication information comprises at least one of the following: a starting unit cell number in the first part of unit cells, a total quantity of unit cells in the first part of unit cells, or a spacing between adjacent unit cells in the first part of unit cells; or
the second indication information comprises a beam grouping policy, wherein the beam grouping policy has an association relationship with the first part of unit cells, and the beam grouping policy is a grouping policy for beams on the RIS; or
the second indication information comprises a bitmap bitmap, and the bitmap indicates position information of the first part of unit cells.

10. The method according to any one of claims 1 to 9, wherein the first rule is determined according to the beam grouping policy, and the beam grouping policy is the grouping policy for the beams on the RIS.

11. The method according to claim 10, wherein the beam grouping policy comprises at least one of the following: performing L levels of beam measurement, a beam group for each level of beam measurement, or a beam in each beam group, wherein L is an integer greater than or equal to 1.

12. The method according to claim 10 or 11, wherein the beam grouping policy is determined based on capability information of the RIS.

13. The method according to any one of claims 10 to 12, wherein the method further comprises any one of the following:
sending the capability information of the RIS, wherein the capability information of the RIS is used to determine the beam grouping policy; or
sending the beam grouping policy to the first communication apparatus; or
receiving the beam grouping policy.

14. The method according to claim 12 or 13, wherein the capability information of the RIS comprises at least one of the following: horizontal and vertical coverage angles of the RIS, an angular resolution, a size of the RIS, or a total quantity of beams on the RIS.

15. The method according to any one of claims 1 to 14, wherein the method further comprises:
receiving third indication information, wherein the third indication information indicates the first rule.

16. The method according to any one of claims 1 to 15, wherein the method further comprises:
receiving a beam measurement result from the second communication apparatus, wherein the beam measurement result is determined based on the reference signal; and
sending the beam measurement result to the first communication apparatus.

17. A signal transmission method, comprising:
sending first indication information and/or third indication information to a reconfigurable intelligent surface RIS, wherein the third indication information indicates a first rule, the first rule indicates that a first part of elements in a beam vector of the RIS are processed, and the first indication information indicates the first part of elements.

18. The method according to claim 17, wherein that the first rule indicates that the first part of elements in the beam vector of the RIS are processed comprises: the first rule indicates that the first part of elements in the beam vector of the RIS are zeroed.

19. The method according to claim 17 or 18, wherein the first part of elements are consecutive elements, or the first part of elements are equally spaced elements.

20. The method according to any one of claims 17 to 19, wherein
the first indication information comprises at least one of the following: a starting element number in the first part of elements, a total quantity of elements in the first part of elements, or a spacing between adjacent elements in the first part of elements; or
the first indication information comprises a beam grouping policy, the beam grouping policy has an association relationship with the first part of elements, and the beam grouping policy is a grouping policy for beams on the RIS; or
the first indication information comprises a bitmap bitmap, and the bitmap indicates position information of the first part of elements.

21. A signal transmission method, comprising:
sending second indication information and/or third indication information to a reconfigurable intelligent surface RIS, wherein the third indication information indicates a first rule, the first rule indicates that a first part of unit cells on the RIS are processed, and the second indication information indicates the first part of unit cells on the RIS.

22. The method according to claim 21, wherein that the first rule indicates that the first part of unit cells on the RIS are processed comprises: the first rule indicates that statuses of the first part of unit cells on the RIS are switched to connected states or off states.

23. The method according to claim 21 or 22, wherein the first part of unit cells are consecutive unit cells, or the first part of unit cells are equally spaced unit cells.

24. The method according to any one of claims 21 to 23, wherein
the second indication information comprises at least one of the following: a start unit cell number in the first part of unit cells, a total quantity of unit cells in the first part of unit cells, or a spacing between adjacent unit cells in the first part of unit cells; or
the second indication information comprises a beam grouping policy, the beam grouping policy has an association relationship with the first part of unit cells, and the beam grouping policy is a grouping policy for beams on the RIS; or
the second indication information comprises a bitmap bitmap, and the bitmap indicates position information of the first part of unit cells.

25. The method according to any one of claims 17 to 24, wherein the first rule is determined according to the beam grouping policy, and the beam grouping policy is the grouping policy of the beams on the RIS.

26. The method according to claim 25, wherein the beam grouping policy comprises at least one of the following: performing L levels of beam measurement, a beam group for each level of beam measurement, or a beam in each beam group, wherein L is an integer greater than or equal to 1.

27. The method according to claim 25 or 26, wherein the beam grouping policy is determined based on capability information of the RIS.

28. The method according to any one of claims 25 to 27, wherein the method further comprises any one of the following:
receiving the capability information of the RIS, wherein the capability information of the RIS is used to determine the beam grouping policy; or
sending the beam grouping policy.

29. The method according to claim 27 or 28, wherein the capability information of the RIS comprises at least one of the following: horizontal and vertical coverage angles of the RIS, an angular resolution, a size of the RIS, or a total quantity of beams on the RIS.

30. A signal transmission method, comprising:
sending a beam grouping policy, wherein the beam grouping policy is a grouping policy for beams on a configurable intelligent surface RIS, and the beam grouping policy comprises at least one of the following: performing L levels of beam measurement, a beam group for each level of beam measurement, or a beam in each beam group, wherein L is an integer greater than or equal to 1.

31. The method according to claim 30, wherein the beam grouping policy is determined based on capability information of the RIS.

32. The method according to claim 31, wherein the capability information of the RIS comprises at least one of the following: horizontal and vertical coverage angles of the RIS, an angular resolution, a size of the RIS, or a total quantity of beams on the RIS.

33. A communication apparatus, comprising a module or a unit configured to perform the method according to any one of claims 1 to 32.

34. A communication apparatus, comprising a processor, wherein the processor is configured to execute a computer program or instructions in a memory, to cause the apparatus to perform the method according to any one of claims 1 to 32.

35. The apparatus according to claim 34, wherein the apparatus further comprises the memory and/or a communication interface, and the communication interface is coupled to the processor; and
the communication interface is configured to: input and/or output information.

36. A computer-readable storage medium, wherein the computer-readable storage medium stores a computer program or instructions, and when the computer program or the instructions are run on a communication apparatus, the communication apparatus is caused to perform the method according to any one of claims 1 to 32.

37. A computer program product, wherein the computer program product comprises a computer program or instructions used to perform the method according to any one of claims 1 to 32.
